# EUROPEAN PATENT APPLICATION

(11) **EP 4 549 184 A1**
(43) Date of publication of application: **07.05.2025**
(21) Application number: 23831147.6
(22) Date of filing: 16.06.2023
(51) Int. Cl.: B60H 1/00, B60H 1/32, B60H 3/06, E02F 9/16, F24F 13/02

(54) **WORK MACHINE**

(30) Priority: 30.06.2022 JP 2022105778; 30.06.2022 JP 2022105779; 30.06.2022 JP 2022105780
(71) Applicant: KUBOTA CORPORATION, Osaka-shi, Osaka 556-8601 (JP)
(72) Inventor: NISHIGORI Yoichi, Sakai-shi, Osaka 590-0908 (JP); HORII Hiroshi, Sakai-shi, Osaka 590-0908 (JP); SAKURAOKA Satoru, Sakai-shi, Osaka 590-0908 (JP)
(74) Representative: Cabinet Beau de Loménie
(86) International application number: PCT/JP2023/022351
(87) International publication number: WO 2024/004700

(57) **Abstract**

Provided is a working machine which makes it possible to eject, through an air outlet of a duct, conditioned air in which cool air and warm air are thoroughly mixed and which is generate by an air conditioner body.

A working machine includes a machine body, a cabin on the machine body, an operator's seat provided inside the cabin, an air conditioner body to generate conditioned air to be supplied into the cabin, and a duct structure to guide conditioned air supplied from the air conditioner body, wherein the air conditioner body is operable to mix cool air and warm air to generate conditioned air for cooling or heating, the duct structure includes a first duct to allow conditioned air for cooling to flow therethrough, a second duct to allow conditioned air for heating to flow therethrough, a switching box connected to the first duct and the second duct and including a switch portion to switch between a first state in which conditioned air supplied from the air conditioner body is allowed to flow through the first duct, and a second state in which conditioned air supplied from the air conditioner body is allowed to flow through the second duct, and a relay duct to connect the air conditioner body and the switching box to guide conditioned air generated by the air conditioner body to the switching box.

## Description

### Technical Field

The present invention relates to a working machine such as a backhoe.

### Background Art

Working machines disclosed in Patent Literatures 1 and 2 are known.

The working machine disclosed in Patent Literature 1 includes a duct to guide and send conditioned air from an air conditioner body into a cabin. The duct includes a plurality of ducts connected together, and includes a plurality of air outlets inside the cabin.

The working machine disclosed in Patent Literature 1 includes a duct to guide and send conditioned air from an air conditioner body into a cabin. The duct includes a plurality of ducts connected together. There is cushioning between ducts (see FIGS. 49 to 53). The cushioning is fixed to surround the connected ends of the ducts.

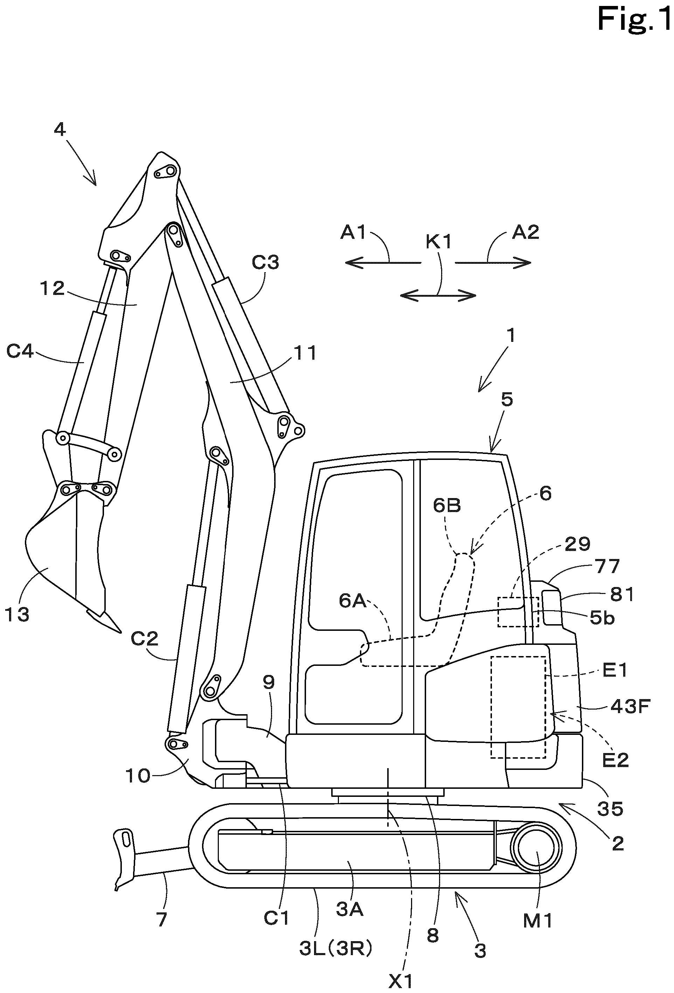

The working machine disclosed in Patent Literature 2 includes a cabin, and an air conditioner body to generate conditioned air to be supplied into the cabin. The cabin is provided, at the left side surface thereof, with an outside air inlet to allow outside air to be supplied to the air conditioner body (see FIG. 1 and paragraph 0178).

### Citation List

### Patent Literature

PTL 1: Japanese Unexamined Patent Application Publication No. 2019-116176
PTL 2: Japanese Unexamined Patent Application Publication No. 2021-4484

### Summary of Invention

### Technical Problem

For the working machine disclosed in Patent Literature 1, an air-mixing air conditioner body to generate conditioned air by mixing cool air and warm air may be used. In such a case, conditioned air in which cool air and warm air are not thoroughly mixed may be discharged from the air conditioner body, pass through the ducts, and be ejected through air outlet(s). Thus, there may be cases in which streams of conditioned air having different temperatures are blown out via a plurality of air outlets.

Furthermore, in the case of the technology disclosed in Patent Literature 1, there may be cases in which, when a second duct is inserted and connected to a first duct, or when the second duct is detached from the first duct, the cushioning comes off because of the inner surface of a duct rubbing against the outer surface of the cushioning.

For the working machine disclosed in Patent Literature 2, a filter to remove foreign matter from the air introduced through the outside air inlet is attached. Recently, it is often required to attach a fine filter capable of removing fine foreign matter. However, since fine filters are easily clogged, the filters need to be large. However, in cases where, like the working machine disclosed in Patent Literature 2, the outside air inlet is provided on the left side of the cabin, it is difficult to attach a large, fine filter because there is only a limited space inside the left side of the cabin.

The present invention was made in view of the above-described problems, and an object thereof is to provide a working machine which makes it possible to eject, through air outlet(s) of duct(s), conditioned air at a suitable temperature generated by the air conditioner body by thoroughly mixing warm air and cool air.

Another object of the present invention is to make it possible, in a working machine including a duct structure including a plurality of connected ducts, to eliminate or reduce the likelihood that cushioning provided between the ducts will come off when the ducts are attached or detached to or from each other.

Another object of the present invention is to provide a work machine in which a large space is available for a filter to remove foreign matter from air introduced through an outside air inlet, and which thereby allows a large filter to be placed in the space.

### Solution to Problem

A working machine according to an aspect of the present invention includes a machine body, a cabin on the machine body, an operator's seat provided inside the cabin, an air conditioner body to generate conditioned air to be supplied into the cabin, and a duct structure to guide conditioned air supplied from the air conditioner body, wherein the air conditioner body is operable to mix cool air and warm air to generate conditioned air for cooling or heating, the duct structure includes a first duct to allow conditioned air for cooling to flow therethrough, a second duct to allow conditioned air for heating to flow therethrough, a switching box connected to the first duct and the second duct and including a switch portion to switch between a first state in which conditioned air supplied from the air conditioner body is allowed to flow through the first duct, and a second state in which conditioned air supplied from the air conditioner body is allowed to flow through the second duct, and a relay duct to connect the air conditioner body and the switching box to guide conditioned air generated by the air conditioner body to the switching box.

The air conditioner body may be located rearward of the operator's seat. The duct structure may extend from a position rearward of the operator's seat, via a space at one side of the operator's seat, to a position forward of the operator's seat.

The working machine may further include a manipulator provided at one side of the operator's seat. The first duct may extend between the manipulator and an inner wall surface of the cabin that faces the manipulator.

The first duct may include a first air outlet. The first air outlet may include a front air outlet which includes an opening located at the one side of the operator's seat and higher than the manipulator.

The first air outlet may include a rear air outlet which includes an opening located rearward of the operator's seat.

The switching box may be provided at the one side of the operator's seat.

The duct structure may extend through a space below the manipulator in a front-rear direction.

The first duct may include a flat portion which is shorter in a machine body width direction than in a front-rear direction. The flat portion may be provided between the manipulator and the inner wall surface of the cabin.

The flat portion may include a front air outlet at a front portion thereof, and includes a rear air outlet at a rear portion thereof.

The first duct may include a main portion to connect the switching box and a third duct provided forward of the first duct, and the flat portion extending upward from the main portion along the inner wall surface of the cabin. The flat portion may be shorter than the main portion in the machine body width direction.

The relay duct may include a passage enlarged portion in which a cross-sectional area of a passage thereof increases in a direction from the air conditioner body toward the switching box.

A working machine according to an aspect of the present invention includes a machine body, a cabin on the machine body, an air conditioner body to generate conditioned air to be supplied into the cabin, and a duct structure to guide conditioned air supplied from the air conditioner body, wherein the duct structure includes one duct and another duct connected together, the one duct includes a first connector portion to be inserted into and connected to the another duct, the another duct includes a second connector portion to receive and to be connected to the one duct, the first connector portion includes a first end surface perpendicular to a direction in which the first connector portion is inserted, the second connector portion includes a second end surface to face the first end surface, and cushioning is interposed between the first end surface and the second end surface.

The first end surface may be an annular surface extending inward from an outer peripheral surface of the one duct. The second end surface may be an annular surface extending inward from an outer peripheral surface of the another duct. The cushioning may be an annular component to abut the first end surface and the second end surface

The second connector portion may include a folded portion folded from a radially innermost portion of the second end surface in a direction away from the first end surface.

The first connector portion may include a tubular portion extending from a radially innermost portion of the first end surface toward the another duct. The tubular portion may be provided, on an outer surface thereof, with a projection to engage with the folded portion.

The folded portion may be configured to abut the outer surface of the tubular portion when the one duct and the another duct are connected to each other.

The cushioning may be configured to abut the first end surface, the second end surface, and the outer surface of the tubular portion when the one duct and the another duct are connected to each other

The cushioning may be bonded to the first end surface or the second end surface.

A working machine according to an aspect of the present invention includes a machine body, a cabin on the machine body, an operator's seat provided inside the cabin, and an air conditioner body to generate conditioned air to be supplied into the cabin, wherein the cabin includes, at a back surface thereof, an outside air inlet to allow outside air to be introduced therethrough into the air conditioner body.

The air conditioner body may be provided rearward of the operator's seat.

The back surface of the cabin may have attached thereto a rear cover projecting rearward from the back surface. The outside air inlet may be provided in the rear cover.

The rear cover may include a lid closeable and openable. The outside air inlet may be provided in the lid.

The working machine may further include a first filter to remove foreign matter contained in outside air introduced through the outside air inlet, an outside air duct to guide outside air that has passed through the first filter toward the air conditioner body. The first filter may be attached to the outside air duct.

The working machine may further include a second filter coarser than the first filter and provided between the outside air inlet and the first filter, and a frame to fix the second filter and the first filter to the outside air duct.

The working machine may further include an insect catching net provided between the outside air inlet and the second filter.

The lid may have, attached to a front portion thereof, a case to house the net such that the net is removable.

The case may include a front panel provided forward of the net such that the front panel faces the outside air inlet. The front panel may include an opening to allow passage of outside air taken in through the outside air inlet. The opening may be located higher than the outside air inlet.

The case may include a projecting portion projecting from the front panel toward the outside air inlet and configured to abut a front surface of the net. The extent to which the projecting portion projects may increase in a top-to-bottom direction.

### Advantageous Effects of Invention

With the above described configuration, even if conditioned air generated by the air conditioner body is ejected such that cool air and warm air are not thoroughly mixed, it is possible to guide, after thoroughly mixing the cool air and warm air in the relay duct, the conditioned air to the switching box. Thus, it is possible to perform switching of the switching box in the state where cool air and warm air are thoroughly mixed. With this, it is possible to guide, from the switching box to the first duct or the second duct, the conditioned air for cooling or heating at a suitable temperature in which cool air and warm air are thoroughly mixed, and to eject the conditioned air.

With the above described configuration, since cushioning is interposed between the first end surface perpendicular to the insertion direction and the second end surface facing the first end surface, the inner surfaces of the ducts are not rubbed against the outer surface of the cushioning when the ducts are attached to or detached from each other. Thus, it is possible to eliminate or reduce the likelihood that the cushioning will come off when the ducts are attached to or detached from each other.

With the above described configuration, since there is/are outside air inlet(s) to allow outside air to be supplied therethrough to the air conditioner body at the back surface of the cabin where a large space is available, it is possible to place large filter(s) to remove foreign matter from the air introduced through the outside air inlet(s).

### Brief Description of Drawings

[FIG. 1] FIG. 1 is a side view schematically illustrating a general configuration of a working machine.
[FIG. 2] FIG. 2 is a plan view schematically illustrating a working machine.
[FIG. 3] FIG. 3 is a plan view schematically illustrating the inside of a cabin.
[FIG. 4] FIG. 4 is a side view schematically illustrating the inside of a cabin.
[FIG. 5] FIG. 5 is a perspective view from the rear right of a cabin and a machine body.
[FIG. 6] FIG. 6 is a perspective view from the rear left of a cabin and a machine body.
[FIG. 7] FIG. 7 is a rear view of a cabin and a machine body.
[FIG. 8] FIG. 8 is a plan cross-sectional view of an air conditioner body and a duct structure.
[FIG. 9] FIG. 9 is a partial cross-sectional side view of an outside air duct, an inside/outside-air switching device, and an air conditioner body.
[FIG. 10] FIG. 10 is a plan view of an operator's seat, a duct structure, an air conditioner body, an outside air duct, an inside/outside-air switching device, and the like.
[FIG. 11] FIG. 11 is a perspective view from the front left of a right manipulator, a duct structure and the like.
[FIG. 12] FIG. 12 is a perspective view of a duct structure.
[FIG. 13] FIG. 13 is an exploded perspective view of a duct structure.
[FIG. 14] FIG. 14 is a plan cross-sectional view showing a portion at which a switching box, a relay duct, a first duct, and a second duct are connected.
[FIG. 15] FIG. 15 is a perspective view from the front left of a right manipulator, an inner wall surface of a cabin, a first duct and the like.
[FIG. 16] FIG. 16 is a perspective view showing a right manipulator, a duct structure, and cover member(s).
[FIG. 17] FIG. 17 is a perspective view from the rear left of the back surface of a cabin and an outside air duct.
[FIG. 18] FIG. 18 is a perspective view showing the back surface of a cabin with a rear cover removed.
[FIG. 19] FIG. 19 is a perspective view of an outside air duct, a first filter, a second filter, and a frame.
[FIG. 20] FIG. 20 is a perspective view from the front of a rear cover.
[FIG. 21] FIG. 21 is a back view showing a rear cover with a lid removed.
[FIG. 22] FIG. 22 is a perspective view of a lid, a net, and a case.
[FIG. 23] FIG. 23 is a perspective view showing a net housed in a case attached to a lid.
[FIG. 24] FIG. 24 is a perspective view showing a net located outside a case attached to a lid.
[FIG. 25] FIG. 25 is a perspective view from the front of a case.
[FIG. 26] FIG. 26 is a longitudinal cross-sectional view of a rear cover, a lid, a net, and a case.
[FIG. 27] FIG. 27 is a plan view showing a lid in a closed state.
[FIG. 28] FIG. 28 is a plan view showing a lid in an open state.
[FIG. 29] FIG. 29 is a perspective view showing a first connector portion of one duct (first duct) and a second connector portion of another duct (third duct).
[FIG. 30] FIG. 30 is a cross-sectional view showing one duct (first duct) and another duct (third duct) in a connected state.
[FIG. 31] FIG. 31 is a cross-sectional view illustrating a method of producing another duct.
[FIG. 32] FIG. 32 is a cross-sectional view showing one duct (second duct) and another duct (fourth duct) in a connected state.

### Description of Embodiments

The following description discusses embodiments of the present invention with reference to the accompanying drawings.

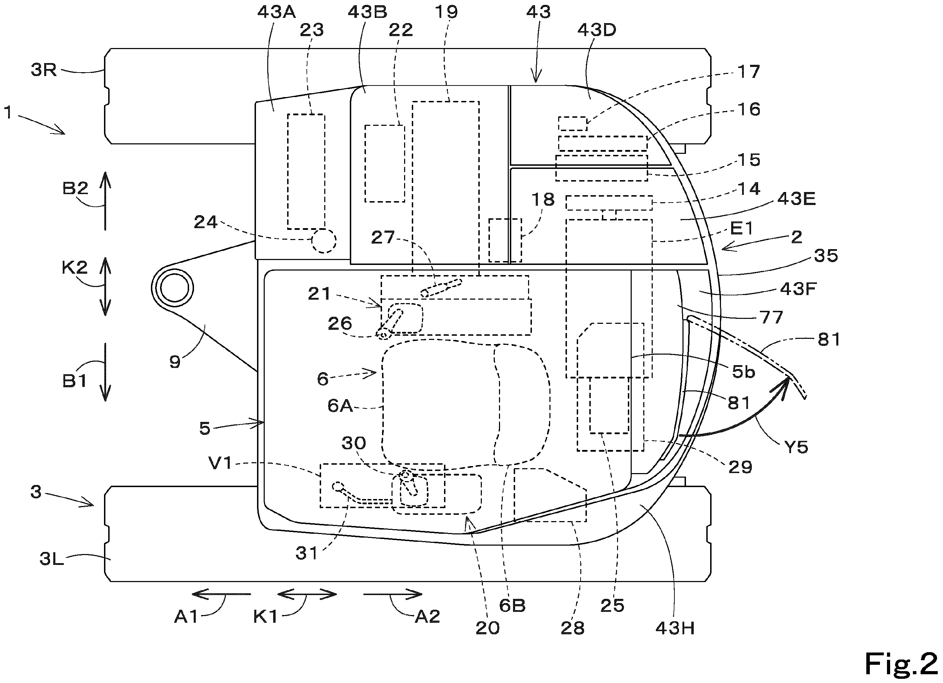

FIG. 1 is a side view schematically illustrating a general configuration of a working machine 1 according to the present embodiment. FIG. 2 is a plan view schematically illustrating the working machine 1. In the present embodiment, a backhoe, which is a swivel working machine, is discussed as an example of the working machine 1.

As shown in FIGS. 1 and 2, the working machine 1 includes a machine body (swivel base) 2, a traveling device 3, and a working device 4. Note that the working device 4 is not illustrated in FIG. 2.

A cabin 5 is mounted on the machine body 2. The cabin 5 contains therein (in the interior thereof) an operator's seat 6 for the operator (user) to sit. That is, the operator's seat 6 is surrounded by the cabin 5. The operator's seat 6 includes a seat 6A where the operator sits, and a backrest 6B to receive the back of the operator.

In the present embodiment, the direction in which the operator seated on the operator's seat 6 of the working machine 1 faces (direction of arrow A1 in FIGS. 1 and 2) is referred to as a forward direction (front), the rearward direction from the operator (direction of arrow A2 in FIGS. 1 and 2) is referred to as a rearward direction (rear), and a direction of arrow K1 in FIGS. 1 and 2 is referred to as a front-rear direction. The leftward direction from the operator (near side in FIG. 1, direction of arrow B1 in FIG. 2) is referred to as a leftward direction (left), and the rightward direction from the operator (far side in FIG 1, direction of arrow B2 in FIG. 2) is referred to as a rightward direction (right). The horizontal direction perpendicular to the front-rear direction K1 is referred to as a machine body width direction K2 (see FIG. 2).

As shown in FIGS. 1 and 2, the traveling device 3 is a crawler type traveling device to support the machine body 2 such that the machine body 2 is allowed to travel. The traveling device 3 includes a travel frame 3A, a first traveling device 3L provided on the left side of the travel frame 3A, and a second traveling device 3R provided on the right side of the travel frame 3A. The first traveling device 3L and the second traveling device 3R are each driven by a travel motor M1 including a hydraulic motor (hydraulic actuator). The crawler type traveling device 3 is used in the present embodiment, but this does not imply any limitation. A wheeled traveling device or the like may be used. A dozer device 7 is attached on the front portion of the traveling device 3 (see FIG. 1).

As shown in FIG. 1, the machine body 2 is supported via a swivel bearing 8 on the traveling device 3 such that the machine body 2 is rotatable about a swivel axis X1 which is an axis extending in the up-and-down direction. As shown in FIG. 2, the cabin 5 is mounted at a front left portion of the machine body 2.

As shown in FIG. 1, the machine body 2 includes, at a front portion thereof, a support bracket 9 and a swing bracket 10 to support the working device 4. The support bracket 9 projects forward from the machine body 2. The swing bracket 10 is attached to the front portion of the support bracket 9 such that the swing bracket 10 is swingable about a vertical axis (axis extending in the up-and-down direction).

As shown in FIG. 1, the working device 4 includes a boom 11, an arm 12 and a bucket 13. The proximal portion of the boom 11 is pivotally attached to an upper portion of the swing bracket 10 to be rotatable about a lateral axis (axis extending in the machine body width direction K2). The arm 12 is pivotally attached to a distal portion of the boom 11 to be rotatable about a lateral axis. The bucket 13 is provided on a distal portion of the arm 12 to be able to shovel and dump.

The working machine 1 is configured to have attached thereto some other working tool (hydraulic attachment) that can be driven by a hydraulic actuator, in addition to or instead of the bucket 13. Examples of such other working tool include hydraulic breakers, hydraulic crushers, angle brooms, earth augers, pallet forks, sweepers, mowers, and snow blowers.

The swing bracket 10 is swingable via the extension and retraction of a swing cylinder C1. The boom 11 is swingable by the extension and retraction of a boom cylinder C2. The arm 12 is swingable by the extension and retraction of an arm cylinder C3. The bucket 13 can shovel or dump by the extension and retraction of a bucket cylinder C4. The swing cylinder C1, the boom cylinder C2, the arm cylinder C3, and the bucket cylinder C4 each include a hydraulic cylinder (hydraulic actuator).

The following description briefly discusses positions and a configuration of main devices mounted on or in the working machine 1 with reference to FIG. 2 and the like.

As shown in FIGS. 1 and 2, a prime mover E1 is mounted on a rear portion of the machine body 2. The prime mover E1 is a diesel engine. Note that the prime mover E1 may be a gasoline engine or an electric motor, or may be a hybrid prime mover that includes an engine and an electric motor. The prime mover E1 has a cooling fan 14 attached to a right portion thereof. The cooling fan 14 is driven by the prime mover E1 to generate cooling air flowing from the right to the left, i.e., from the outside of the machine body 2 toward the prime mover E1.

A radiator 15, an oil cooler 16 and a fuel cooler 17 are provided on the right of the cooling fan 14. The radiator 15 is a cooler to cool coolant that cools the prime mover E1. The oil cooler 16 is a cooler to cool return hydraulic fluid returning from hydraulic actuators such as hydraulic cylinder(s) and/or hydraulic motor(s). The fuel cooler 17 is a cooler to cool fuel. The coolers are cooled by cooling air drawn in by the cooling fan 14.

A compressor 18 driven by the prime mover E1 is provided forward of a right portion of the prime mover E1. The compressor 18 is a device included in an air conditioning system (air conditioner) of the working machine 1, and compresses coolant (air conditioning gas) into semi-liquid.

A fuel tank 19 is provided in front of the compressor 18, the radiator 15 and the oil cooler 16. The fuel tank 19 is a tank to store fuel for the prime mover E1. A battery 22 is provided in front of the fuel tank 19. The battery 22 is a storage battery to supply electricity to electric component(s) in or on the working machine 1.

A condenser 23 and a receiver 24, which are included in the air conditioning system, are provided in front of the battery 22. The condenser 23 is a device to dissipate heat of the coolant from the compressor 18 to liquefy the coolant. Specifically, the condenser 23 is a cooler to cool the semi-liquid coolant obtained by the compressor 18 to promote the liquefaction. In the present embodiment, the condenser 23 is an electric condenser cooled by an electric fan. The receiver 24 is a device to store the coolant liquefied by the condenser 23, and to separate the liquefied coolant from the coolant not liquefied by the condenser 23 and to remove moisture and impurities.

A hydraulic pump 25 is attached to one of opposite ends (left portion) of the prime mover E1. The hydraulic pump 25 is driven by power from the prime mover E1. The hydraulic pump 25 delivers hydraulic fluid (pressure oil) to drive hydraulic actuators such as hydraulic motor(s) and/or hydraulic cylinder(s) in or on the working machine 1.

A hydraulic fluid tank 28 is provided on the left of the prime mover E1. The hydraulic fluid tank 28 is a tank to store hydraulic fluid. The hydraulic fluid tank 28 is provided lower than the operator's seat 6. Hydraulic fluid is supplied from the hydraulic fluid tank 28 to the hydraulic pump 25.

A control valve V1 is provided in front of the hydraulic fluid tank 28. The control valve V1 controls the flow rate of hydraulic fluid supplied from the hydraulic pump 25 to hydraulic actuator(s) in or on the working machine 1 driven by the hydraulic fluid. Specifically, the control valve V1 is a valve unit including a group of control valves to control the flow rate of hydraulic fluid supplied to the hydraulic actuators in or on the working machine 1.

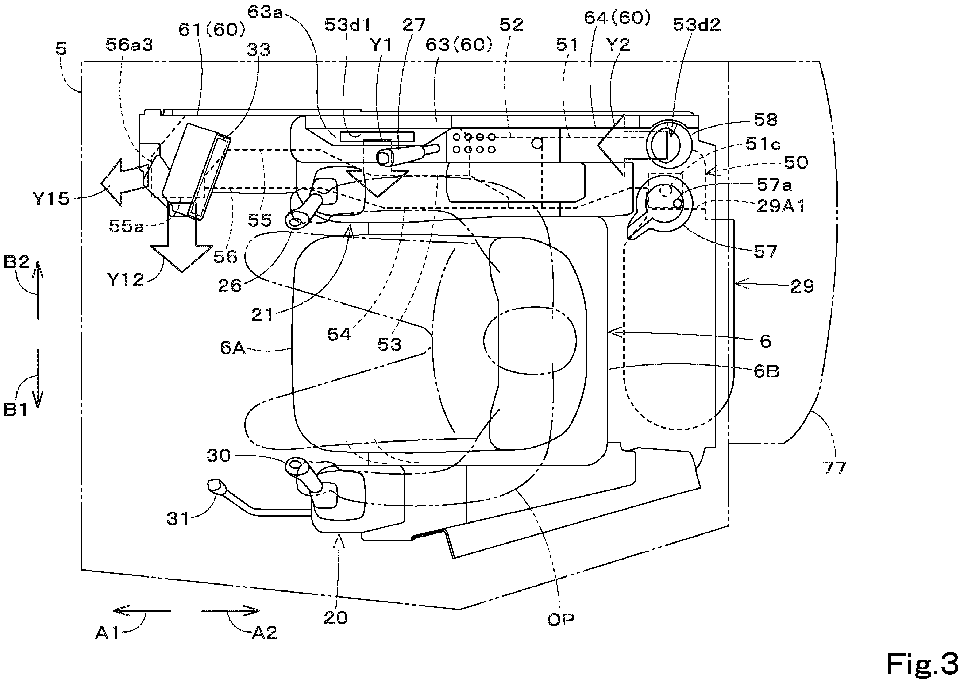

As shown in FIGS. 2 and 3, a left manipulator 20 and a right manipulator 21 are provided on opposite sides of the operator's seat 6. The left manipulator 20 is provided at the left of the operator's seat 6. The right manipulator 21 is provided at the right of the operator's seat 6.

The right manipulator 21 includes a right operating lever 26 and a dozer operating lever 27. It is possible to control control valve(s) for the boom cylinder C2 and the bucket cylinder C4 by operating the right operating lever 26. It is possible to control control valve(s) for the dozer cylinder by operating the dozer operating lever 27.

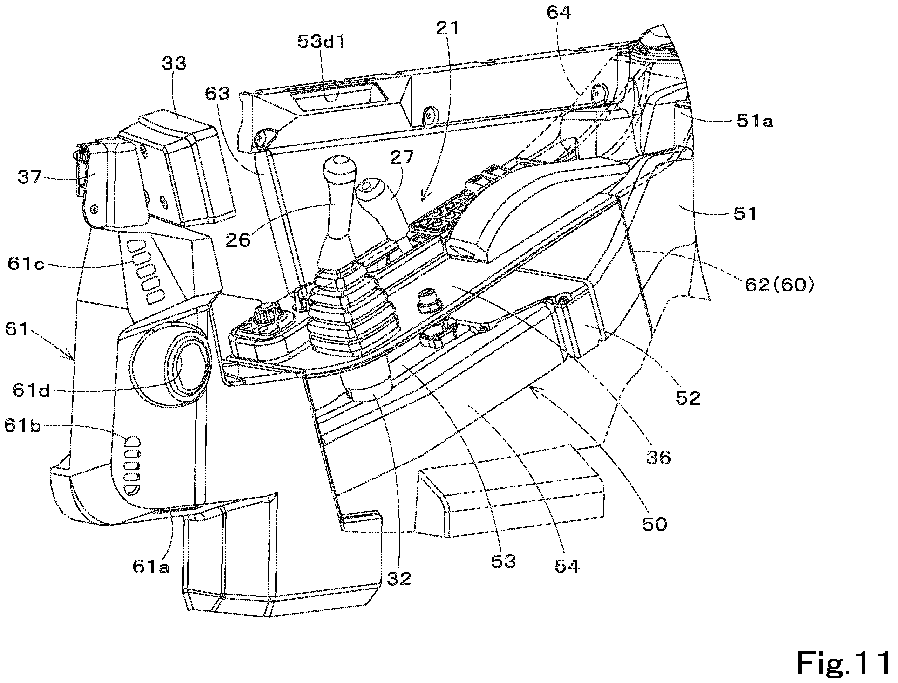

The right manipulator 21 is a manipulator to output electric signals according to the operation of the right operating lever 26 or the dozer operating lever 27. The right operating lever 26 is a joystick lever pivotable forward, rearward, leftward and rightward. The dozer operating lever 27 is a lever pivotable rearward and forward. The right manipulator 21 includes a first detector 32 (see FIG. 11) to detect the operation amount and the operation direction of the right operating lever 26, and a second detector (not illustrated) to detect the operation amount and the operation direction of the dozer operating lever 27. The first detector 32 outputs an electric signal to control control valve(s) (solenoid valve(s)) for the boom cylinder C2 and the bucket cylinder C4 according to the operation amount and the operation direction of the right operating lever 26. The second detector outputs an electric signal to control control valve(s) (solenoid valve(s)) for the dozer cylinder according to the operation amount and the operation direction of the dozer operating lever 27.

The left manipulator 20 includes a left operating lever 30 and an unloading lever 31. It is possible to control control valve(s) for swiveling and arm operation by operating the left operating lever 30. It is possible to switch hydraulic actuator(s) of the working machine 1 between an operation-enabled state and an operation-disabled state by operating the unloading lever 31.

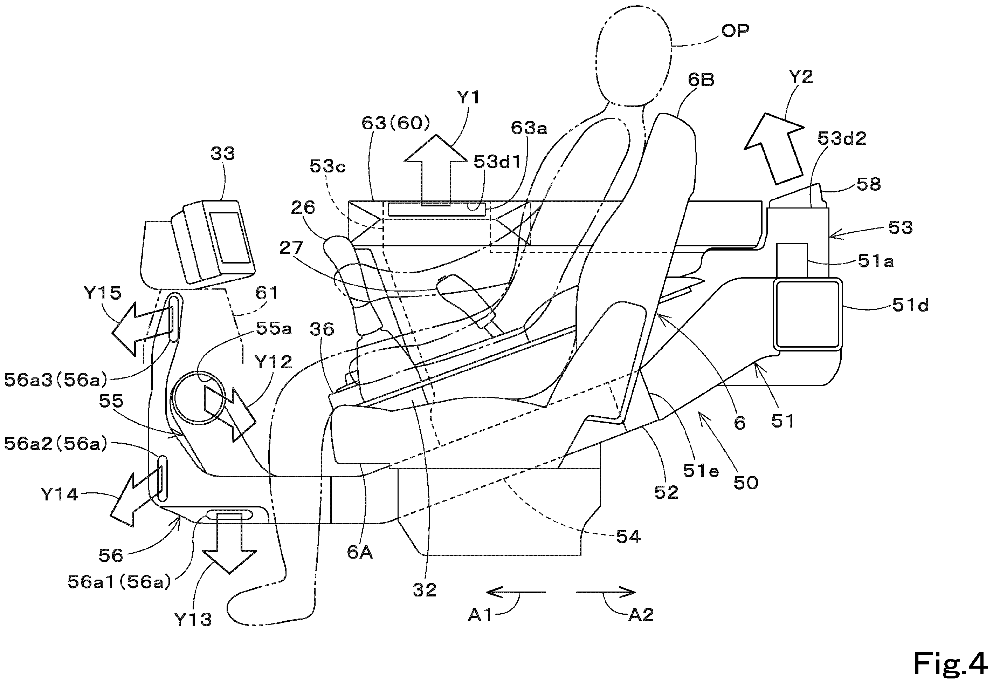

As shown in FIGS. 3 and 4, a display 33 is provided at the front right of the operator's seat 6. The display 33 includes a panel (meter panel) such as a liquid crystal panel. The panel displays items such as image(s) of a surrounding area of the working machine, operation status, mode change, various settings, and/or warnings relating to the working machine. The panel also displays information relating to the working machine such as the remaining amount of fuel, time (time of day), settings of height control, auto idle (AI) control settings, and information for use in machine settings such as arm limitation settings. However, the items to be displayed on the display 33 described above are examples and do not imply any limitation.

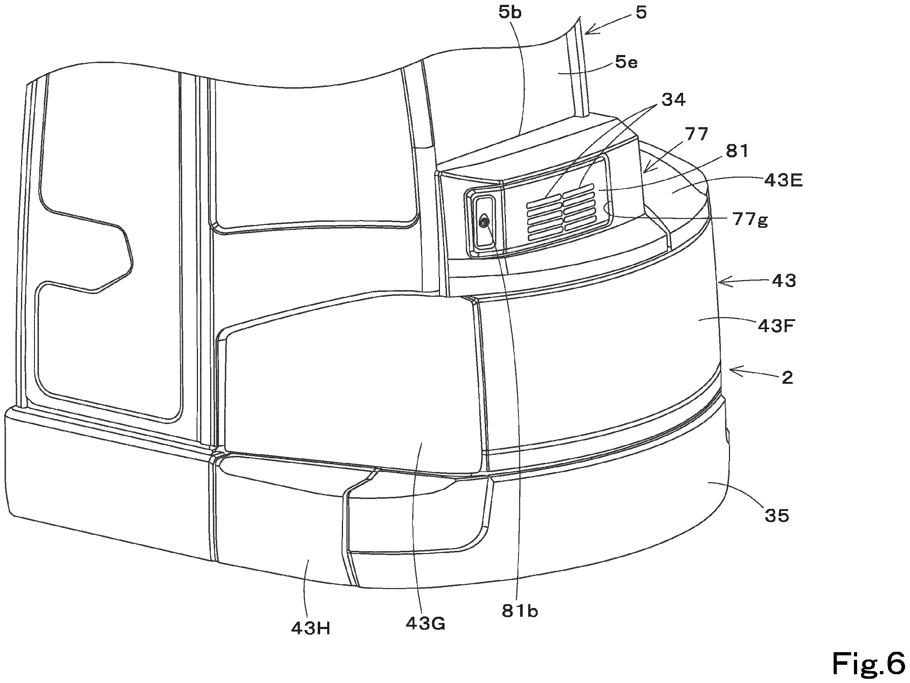

As shown in FIGS. 2, 5 and 6, the machine body 2 includes a cover unit 43. The cover unit 43 covers devices, components, members, and/or the like on the swivel base provided at a lower portion of the machine body 2. The cover unit 43 includes a plurality of covers. The plurality of covers include first to eighth to eighth covers 43A to 43H. Each cover is detachable or closeable/openable.

The first cover 43A is provided at a front right portion of the machine body 2 and covers the condenser 23 and the receiver 24. The second cover 43B is provided rearward of the first cover 43A and covers the top of the fuel tank 19 and the battery 22. The third cover 43C covers the right side of the fuel tank 19 and of the battery 22. The fourth cover 43D covers the top, right, and rear of the radiator 15, the oil cooler 16 and the fuel cooler 17. The fourth cover 43D includes opening(s) 44 to allow outside air to be introduced therethrough when the cooling fan 14 is driven.

The fifth cover 43E covers the top of the cooling fan 14 and of the radiator 15. The sixth cover 43F covers the rear of the prime mover E1. A weight 35 is provided below the sixth cover 43F. The seventh cover 43G covers the left of the upper portion of the hydraulic fluid tank 28. The eighth cover 43H is provided below the seventh cover 43G and covers the left of a lower portion of the hydraulic fluid tank 28.

As shown in FIGS. 1 and 2, an air conditioner body 29 is provided above the prime mover E1 and the hydraulic pump 25. As shown in FIG. 1, the air conditioner body 29 is provided above the prime mover room (engine room) E2 to house the prime mover E1. The air conditioner body 29 is provided rearward of the operator's seat 6. Since the air conditioner body 29, which is provided below the operator's seat 6 in related techniques, is provided above the prime mover room E2 and rearward of the operator's seat 6, it is possible to increase the space at the feet of the operator.

The air conditioner body 29 is a device included in a main portion of the air conditioning system. The air conditioner body 29 generates conditioned air (temperature-controlled air) to be supplied into the cabin 5.

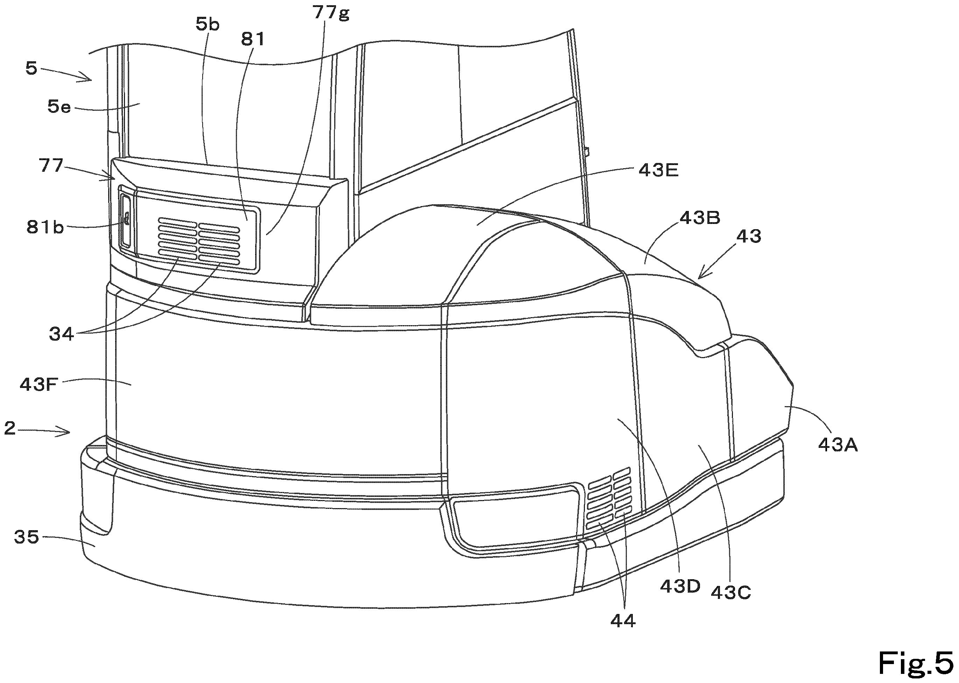

As shown in FIGS. 5, 6 and 7, the cabin 5 is provided, at a back surface thereof, with outside air inlet(s) 34 to allow outside air to be introduced therethrough into the air conditioner body 29. The air conditioner body 29 takes in the air (outside air) introduced through the outside air inlets 34 or takes in air inside the cabin 5 (inside air), and generates temperature-controlled air (conditioned air) from the air taken in.

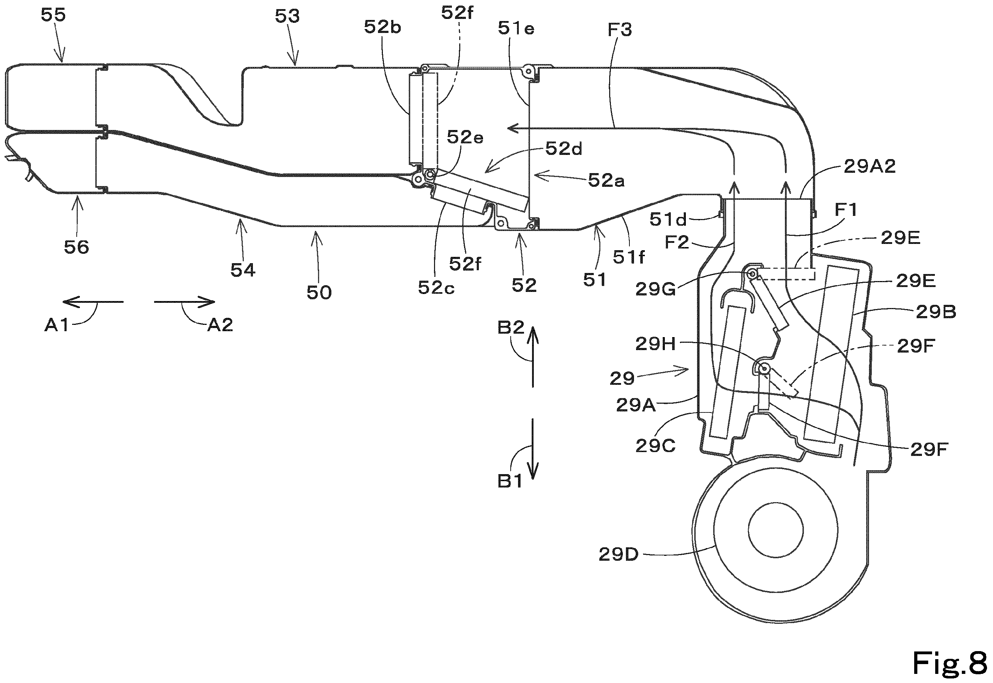

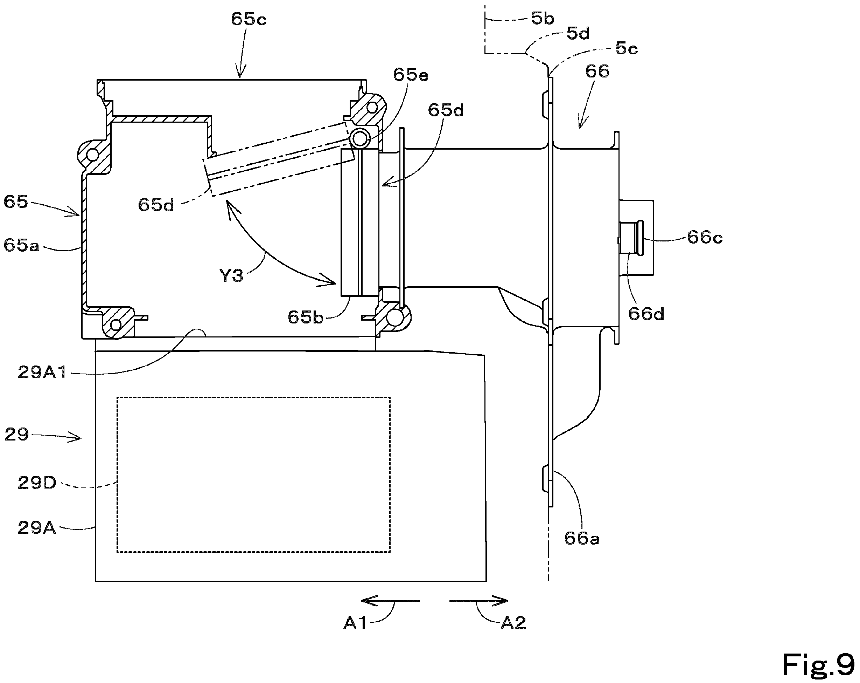

As shown in FIG. 8, the air conditioner body 29 includes (i) a housing 29A and (ii) an evaporator 29B, a heater core 29C, a blower fan 29D and/or the like provided inside the housing 29A. The housing 29A is provided with an air inlet 29A1 and an air outlet 29A2. The air inlet 29A1 is provided at an upper portion of the housing 29A (above the blower fan 29D) (see FIG. 9). The air outlet 29A2 is provided at a right portion of the housing 29A. A flow of air generated by the driving of the blower fan 29D is introduced through the air inlet 29A1 into the housing 29A, and is ejected through the air outlet 29A2 to the outside of the housing 29A.

The air conditioning system including the air conditioner body 29 sprays the coolant from the receiver 24 through an expansion valve into the evaporator 29B to vaporize the coolant, cools the evaporator 29B using the vaporized coolant, and allows the air generated by the blower fan 29D to pass through the evaporator 29B to generate cool air. The coolant having moved out of the evaporator 29B returns to the compressor 18. A heating system of the air conditioning system uses the heat of the prime mover E1. Specifically, the heater core 29C is heated using, as a heat medium, hot water heated by the heat of the prime mover E1, and the air generated by the blower fan 29D is allowed to pass through the heater core 29C to generate warm air.

The air conditioner body 29 is an air-mixing air conditioner body to generate conditioned air for cooling or for heating by mixing cool air and warm air. A first air mix door 29E and a second air mix door 29F are provided inside the housing 29A of the air conditioner body 29. The first air mix door 29E is swingable about a first swing shaft 29G. The second air mix door 29F is swingable about a second swing shaft 29H.

When the first air mix door 29E and the second air mix door 29F are both in their position indicated by solid lines (first state), the flow of air generated by the blower fan 29D is a first flow F1 which passes through the evaporator 29B but does not pass through the heater core 29C. Since the first flow F1 passes through the evaporator 29B to be cooled and does not pass through the heater core 29C, the first flow F1 is a cool airflow.

When the first air mix door 29E and the second air mix door 29F are both in their position indicated by dot-dot-dash lines (second state), the flow of air generated by the blower fan 29D is a second flow F2 that passes through the evaporator 29B and the heater core 29C. Since the second flow F2 passes through the evaporator 29B and then passes through the heater core 29C to be heated, the second flow F2 is a warm airflow.

When the first air mix door 29E is in the position indicated by a solid line and the second air mix door 29F is in the position indicated by a dot-dot-dash line (third state), the air generated by the blower fan 29D flows along both the first flow F1 and the second flow F2. As described above, the first flow F1 is a cool airflow, and the second flow F2 is a warm airflow.

The air conditioner body 29 generates conditioned air for cooling or for heating using the cool airflow (first flow) generated by passing through the evaporator 29B and using the warm airflow (second flow) generated by passing through the evaporator 29B and the heater core 29C.

The temperature of the conditioned air generated by the air conditioner body 29 can be adjusted by, in the third state, adjusting the angle of the air mix doors (first air mix door 29E and second air mix door 29F) to change the ratio between the amount of air of the first flow F1 and the amount of air of the second flow F2. When the amount of air of the first flow F1 is increased and the amount of air of the second flow F2 is reduced, the temperature of the conditioned air generated by the air conditioner body 29 decreases. When the amount of air of the first flow F1 is reduced and the amount of air of the second flow F2 is increased, the temperature of the conditioned air generated by the air conditioner body 29 increases. With this, the air conditioner body 29 is able to generate conditioned air for cooling (temperature-controlled air for cooling) and conditioned air for heating (temperature-controlled air for heating). In the following description, the temperature-controlled air for cooling will be referred to as "cool conditioned air", and the temperature-controlled air for heating will be referred to as "warm conditioned air".

As shown in FIG. 8, air of the first flow F1 (cool air generated by passing through the evaporator 29B) and air of the second flow F2 (warm air generated by passing through the evaporator 29B and the heater core 29C) are ejected from the air outlet 29A2 of the housing 29A.

The air outlet 29A2 has an opening facing in one direction along the machine body width direction (facing rightward). The air of the first flow F1 (cool air generated by passing through the evaporator 29B) is ejected from a rear portion of the air outlet 29A2. The air of the second flow F2 (warm air generated by passing through the evaporator 29B and the heater core 29C) is ejected from a front portion of the air outlet 29A2. That is, the cool air and the warm air ejected from the air outlet 29A2 are ejected from different positions (positions displaced from each other in the front-rear direction) in the air outlet 29A2. Thus, when the conditioned air is ejected from the air conditioner body 29, the conditioned air is in the state where cool air and warm air are not thoroughly mixed.

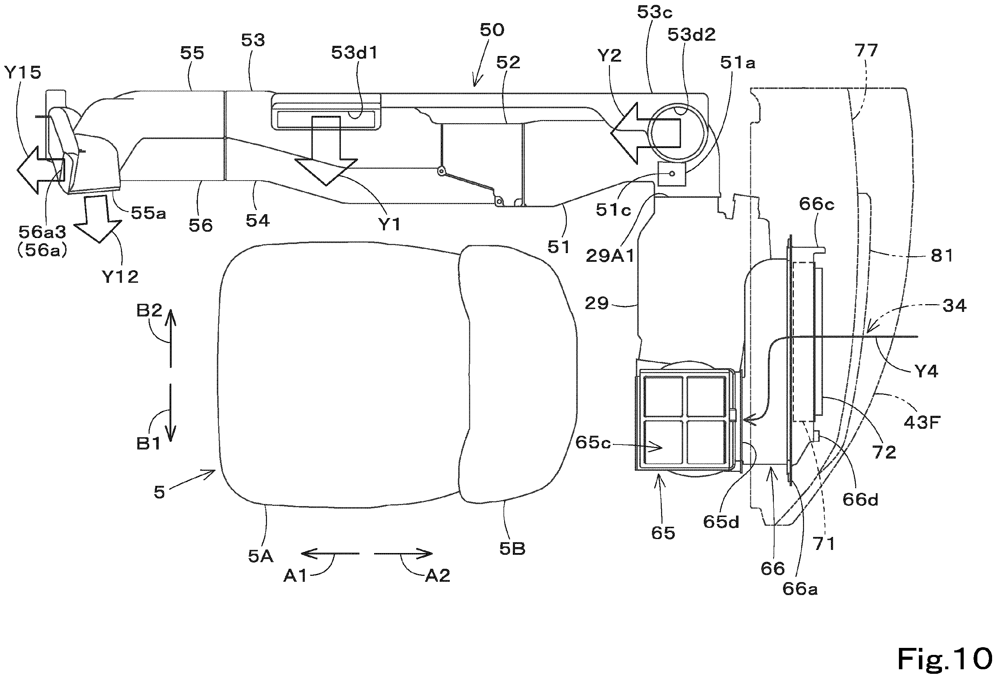

As shown in FIGS. 8, 10 and the like, a duct structure 50 is connected to the air conditioner body 29. The duct structure 50 guides the conditioned air supplied from the air conditioner body 29. The duct structure 50 is connected to the air outlet 29A2 of the housing 29A of the air conditioner body 29. The internal space of the duct structure 50 communicates with the air outlet 29A2. The duct structure 50 defines a passage to guide the conditioned air generated by the air conditioner body 29 into the cabin 5.

As shown in FIGS. 3 and 10, the duct structure 50 extends from a position rearward of the operator's seat 6, via a space at one side (right side) of the operator's seat 6, to a position forward of the operator's seat 6. As shown in FIGS. 4 and 11 etc., the duct structure 50 extends in the front-rear direction through a space below (substantially below) the right manipulator 21.

The right manipulator 21 includes manual operators such as the right operating lever 26 and the dozer operating lever 27, detector(s) (such as the first detector 32, the second detector) to detect operation of the manual operators and to output electric signals, and a mounting plate 36 to attach thereto manual operator(s) and/or detector(s). The duct structure 50 extends in the front-rear direction through a space below the manual operator(s), detector(s), mounting plate 36 and/or the like of the right manipulator 21.

As described earlier, the right manipulator 21 is an electric controller to output electric signals in response to the operation of the right operating lever 26 or the dozer operating lever 27. Thus, the right manipulator 21 does not have connected thereto hoses (pilot hoses) to allow hydraulic fluid for use in the control by the operation of the right operating lever 26 to flow therethrough. Therefore, no pilot hoses are provided below the right manipulator 21. Thus, there is a space below the right manipulator 21 because the pilot hoses are not provided, making it possible to place the duct structure 50 in the space.

As shown in FIGS. 8, 10, 12 and 13, the duct structure 50 includes a relay duct 51, a switching box 52, a first duct 53, a second duct 54, a third duct 55, and a fourth duct 56.

The relay duct 51 connects the air conditioner body 29 and the switching box 52. As shown in FIG. 8, a first end portion 51d of the relay duct 51 is connected to the air outlet 29A2 of the air conditioner body 29. A second end portion 51e of the relay duct 51 is connected to the switching box 52.

As shown in FIGS. 3 and 10, the relay duct 51 is located rearward of the seat 6A of the operator's seat 6. The position of the first end portion of the relay duct 51 in the front-rear direction is located rearward of the operator's seat 6. The position of the second end portion of the relay duct 51 in the front-rear direction overlaps that of the operator's seat 6. Specifically, the position of the second end portion of the relay duct 51 in the front-rear direction overlaps that of the backrest 6B of the operator's seat 6.

The relay duct 51 allows the cool air and the warm air ejected from the air outlet 29A2 of the air conditioner body 29 to mix together, and guides the mixed air to the switching box 52. In other words, the relay duct 51 is long enough to allow the cool air and the warm air ejected from the air outlet 29A2 of the air conditioner body 29 to mix together (has a length that allows the cool air and the warm air to mix together). With this, as shown in FIG. 8, the cool air flow F1 and the warm air flow F2 are thoroughly mixed into a flow F3 while flowing through the relay duct 51. Thus, the air having passed through the relay duct 51 and introduced into the switching box 52 is conditioned air which is a thoroughly mixed mixture of cool air and warm air. That is, the internal space of the relay duct 51 functions as an preparation to the switching box 52 that allows cool air and warm air from the air conditioner body 29 to be thoroughly mixed.

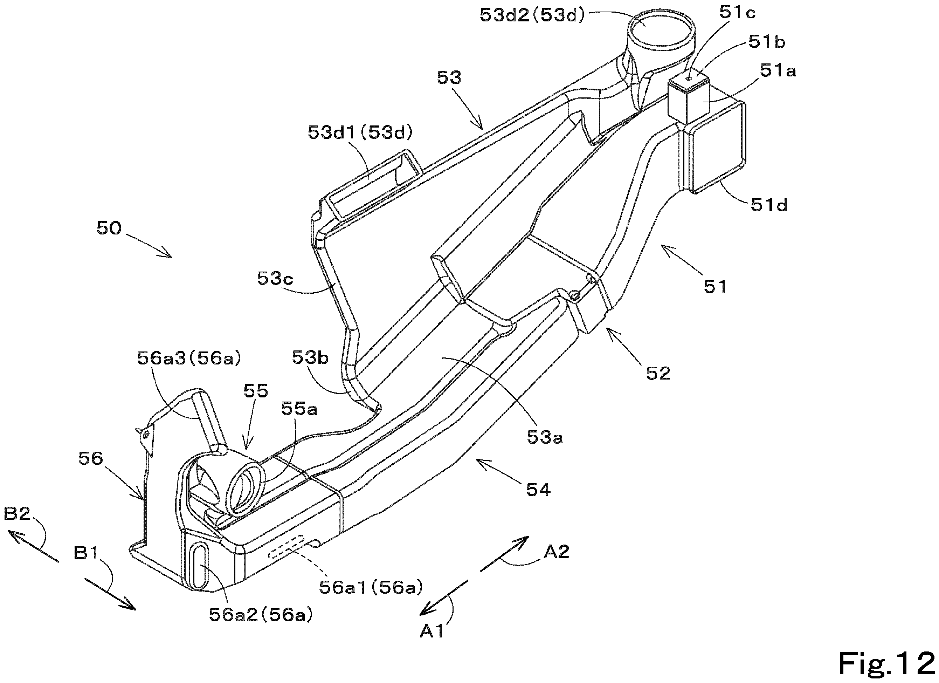

As shown in FIGS. 8 and 10, the relay duct 51 bends from the portion thereof that is connected to the air outlet 29A2 of the air conditioner body 29 and extends forward. As shown in FIGS. 4 and 12, the relay duct 51 inclines such that the relay duct 51 extends diagonally forward and downward. Thus, since the relay duct 51 bends and inclines, cool air and warm air are easily mixed together.

As shown in FIG. 8, the relay duct 51 includes a passage enlarged portion 51f in which a cross-sectional area of a passage thereof increases in the direction from the air conditioner body 29 toward the switching box 52. That is, the cross-sectional area of the passage at the second end portion of the relay duct 51 is larger than that at the air outlet 29A2 of the air conditioner body 29. With this, the velocity of the air flowing through the relay duct 51 decreases as the air flows toward the switching box 52. Thus, it is possible to more reliably mix the cool air and the warm air.

As shown in FIGS. 4, 10, 12 and the like, the relay duct 51 includes an extending portion 51a which extends upward. The extending portion 51a is provided at a rear portion (in the vicinity of the air outlet 29A2) of the relay duct 51. The upper end portion of the extending portion 51a is provided with a lid 51b. The lid 51b includes a first through-hole 51c. A cup holder 57 to hold a beverage container or the like (see FIG. 3) is provided above the lid 51b of the extending portion 51a. The bottom of the cup holder 57 is located above the lid 51b. The bottom of the cup holder 57 includes a second through-hole 57a. A portion of the conditioned air ejected from the air outlet 29A2 of the air conditioner body 29 is guided to the extending portion 51a and released into the cup holder 57 through the first through-hole 51c and the second through-hole 57a. With this, it is possible to cool or warm the beverage container held by the cup holder 57.

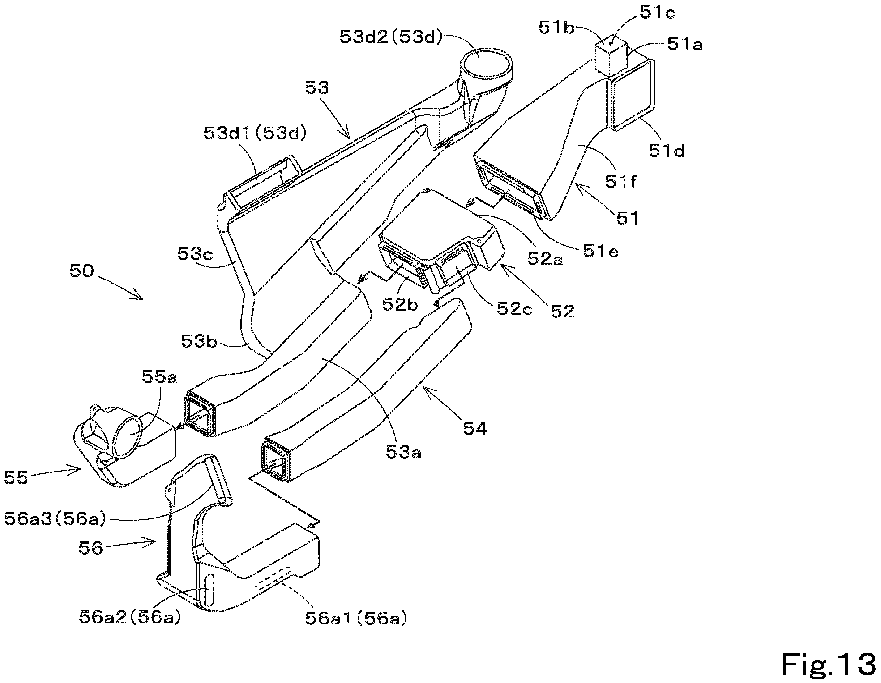

As shown in FIGS. 8, 10 and 12, the switching box 52 is connected to the relay duct 51, the first duct 53, and the second duct 54. As shown in FIG. 13, the switching box 52 includes a rear connection port 52a, a front connection port 52b, and a side connection port 52c. The rear connection port 52a has an opening facing rearward. The front connection port 52b has an opening facing forward. The side connection port 52c has an opening facing diagonally leftward and forward. The rear connection port 52a is connected to the relay duct 51. The front connection port 52b is connected to the first duct 53. The side connection port 52c is connected to the second duct 54.

As shown in FIGS. 3 and 10, the switching box 52 is provided at one side (right) of the operator's seat 6. As shown in FIG. 4, in side view, a portion or the entirety of the switching box 52 overlaps the operator's seat 6. The switching box 52 is provided below the right manipulator 21.

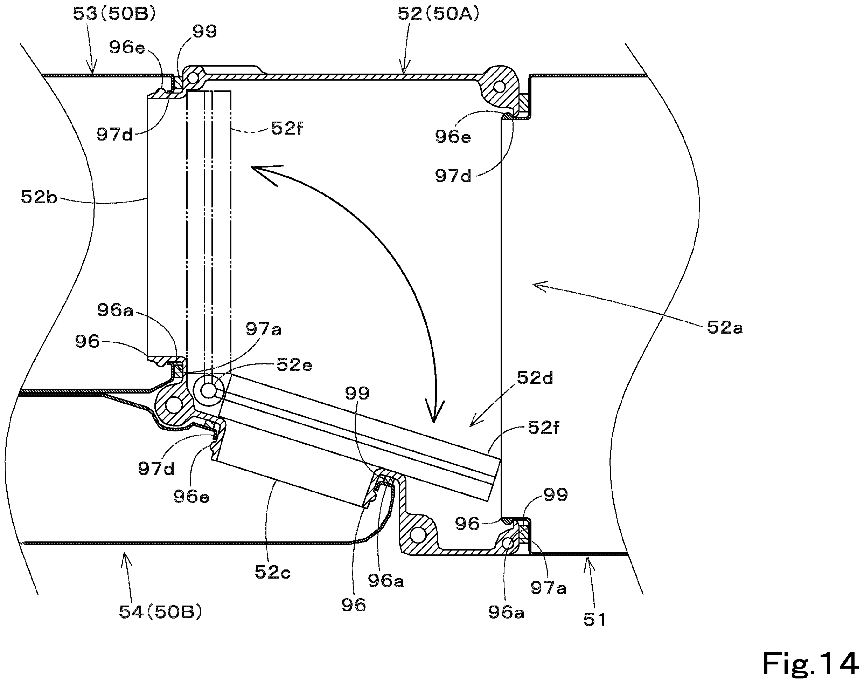

As shown in FIGS. 8 and 14, the switching box 52 includes a switch portion 52d to switch between a first state in which the switching box 52 communicates with the first duct 53, and a second state in which the switching box 52 communicates with the second duct 54. The first state in which the switching box 52 communicates with the first duct 53 is a state in which the conditioned air supplied from the air conditioner body 29 is allowed to flow through the first duct 53. The second state in which the switching box 52 communicates with the second duct 54 is a state in which the conditioned air supplied from the air conditioner body 29 is allowed to flow through the second duct 54.

The switch portion 52d includes a swing plate 52f swingable about a support shaft 52e. The swing plate 52f is swingable between (i) a first position (position indicated by a solid line) to close the side connection port 52c and open the front connection port 52b and (ii) a second position (indicated by a dot-dot-dash line) to close the front connection port 52b and open the side connection port 52c.

When the swing plate 52f is in the first position, the switching box 52 is in the first state to communicate with the first duct 53. When the swing plate 52f is in the second position, the switching box 52 is in the second state to communicate with the second duct 54. When cool conditioned air flows in the relay duct 51, the switching box 52 is in the first state, and cool conditioned air flows through the front connection port 52b into the first duct 53. When warm conditioned air flows in the relay duct 51, the switching box 52 is in the second state, and warm conditioned air flows through the side connection port 52c into the second duct 54.

The swing plate 52f is swung by an electric drive mechanism such as an electric motor. The drive mechanism is driven by the operator operating an operating switch (not illustrated) provided in the vicinity of the operator's seat 6. The operating switch is, for example, a switch to switch between a cooling mode and a heating mode.

When the operator switches the operating switch to the cooling mode, the swing plate 52f is brought into the first position, and cool air for cooling flows from the switching box 52 to the first duct 53. In so doing, cool conditioned air is generated in the air conditioner body 29, and that cool conditioned air is supplied to the switching box 52 via the relay duct 51.

When the operator switches the operating switch to the heating mode, the swing plate 52f is brought into the second position, and warm air for heating flows from the switching box 52 to the second duct 54. In so doing, warm conditioned air is generated in the air conditioner body 29, and that warm conditioned air is supplied to the switching box 52 via the relay duct 51.

The first duct 53 allows the cool conditioned air ejected from the switching box 52 to flow therethrough. The first duct 53 connects the switching box 52 and the third duct 55. As shown in FIG. 12, (i) the first duct 53 and (ii) the combination of the relay duct 51, the switching box 52 and the second duct 54, are arranged in the machine body width direction.

As shown in FIGS. 12 and 13, the first duct 53 includes a first portion 53a, a second portion 53b, and a third portion 53c. The first portion 53a, the second portion 53b, and the third portion 53c are integral with each other, and their internal spaces communicate with each other.

The first portion 53a is a rectangular tube, and extends in the front-rear direction. The rear end portion of the first portion 53a is connected to the switching box 52, and the front end portion of the first portion 53a is connected to the third duct 55. In other words, the first portion 53a is a connector portion to connect the switching box 52 to the third duct 55 provided forward of the first duct 53. The first portion 53a inclines such that the first portion 53a extends diagonally forward and downward.

The second portion 53b is a portion to connect the first portion 53a and the third portion 53c. The second portion 53b extends in a lateral direction (rightward) from a side surface (right side surface) of a rear portion of the first portion 53a and then bends to extend upward.

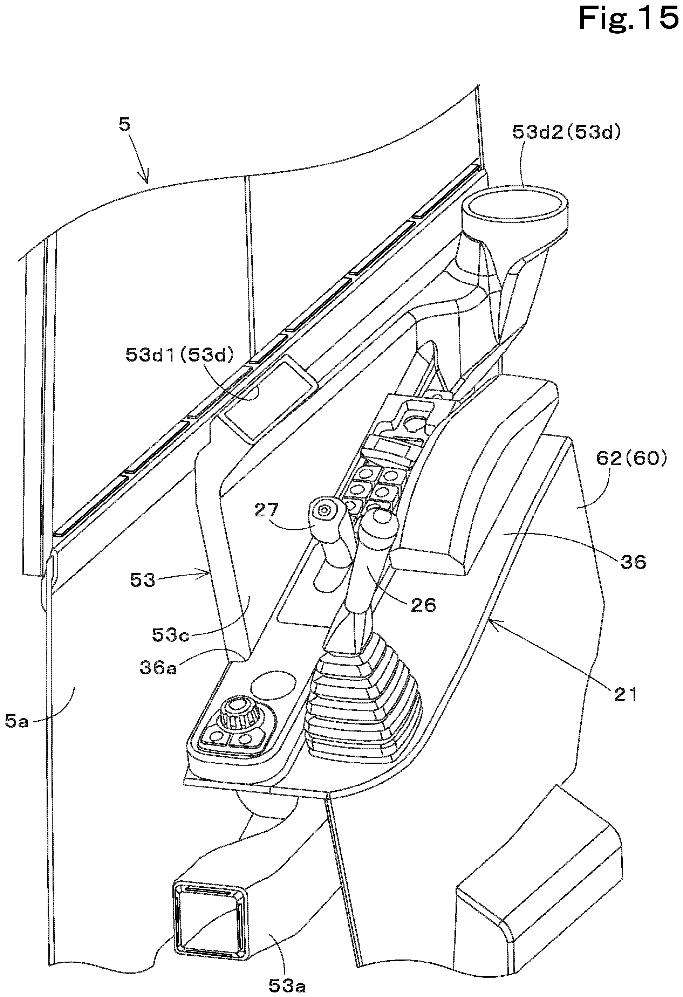

The third portion 53c extends upward from the upper end of the second portion 53b. The third portion 53c is a flat portion shorter in the machine body width direction than in the front-rear direction. As shown in FIG. 15, the third portion 53c is provided between the right manipulator 21 and an inner wall surface 5a of the cabin 5. The third portion 53c extends in the up-and-down direction through a space between the right manipulator 21 and the inner wall surface (right wall surface) 5a of the cabin 5 that faces the right manipulator 21. That is, the third portion (flat portion) 53c extends upward from the first portion (main portion) 53a along the inner wall surface 5a of the cabin 4. The third portion (flat portion) 53c is shorter than the first portion (main portion) 53a in the machine body width direction.

The mounting plate 36 of the right manipulator 21A includes, at a right portion (one of opposite portions that is closer to the inner wall surface 5a) thereof, a cutout 36a which is recessed leftward (toward the operator's seat 6). The third portion 53c is fitted in the cutout 36a. As shown in FIGS. 12 and 13, the third portion 53c extends rearward to a greater extent than the first portion 53a. As shown in FIG.10, the third portion 53c extends rearward to a greater extent than the operator's seat 6.

As shown in FIGS. 3, 4, 10, 13, 15 and the like, the first duct 53 includes first air outlet(s) 53d. The first air outlet 53d is an air outlet through which cool conditioned air is ejected. The first air outlets 53d include a front air outlet 53d1 and a rear air outlet 53d2. The front air outlet 53d1 is provided at an upper front portion of the third portion 53c. The rear air outlet 53d2 is provided at an upper rear portion of the third portion 53c.

As shown in FIGS. 3 and 10, the front air outlet 53d1 is provided at one side (right side) of the operator's seat 6. As shown in FIG. 4, the front air outlet 53d1 is positioned higher than the right manipulator 21. The position of the front air outlet 53d1 in the front-rear direction overlaps that of the seat 6A of the operator's seat 6. Specifically, the front end of the front air outlet 53d1 is located rearward of the front end of the seat 6A, and the rear end of the front air outlet 53d1 is located forward of the rear end of the seat 6A. The position (height) of the front air outlet 53d1 in the up-and-down direction overlaps that of the backrest 6B of the operator's seat 6. As shown in FIG. 12, the front air outlet 53d1 has an opening facing diagonally leftward and upward.

Cool conditioned air is blown diagonally leftward and upward (toward the space above the operator's seat 6) from the front air outlet 53d1 provided rightward of the seat 5A of the operator's seat 6 (see arrow Y1 in FIGS. 3, 4 and 10). With this, cool conditioned air is blown toward the vicinity of the face (front of the face) of the operator OP seated on the operator's seat 6. Thus, cool conditioned air is blown to the vicinity of the face of the operator OP, giving a strong cool feeling to the operator OP.

As shown in FIGS. 3 and 4, the rear air outlet 53d2 is located rearward of the operator's seat 6. As shown in FIG. 3, the rear air outlet 53d2 is located rightward of the operator's seat 6. That is, the rear air outlet 53d2 is located diagonally rightward and rearward of the operator's seat 6. As shown in FIG. 4, the rear air outlet 53d2 is located higher than the right manipulator 21. The position (height) of the rear air outlet 53d2 in the up-and-down direction overlaps that of the backrest 6B of the operator's seat 6. The rear air outlet 53d2 has an opening facing upward. A blowing pipe 58 is attached to the rear air outlet 53d2. The blowing pipe 58 has an opening facing diagonally forward and upward.

Cool conditioned air is blown diagonally forward and upward from the rear air outlet 53d2 located diagonally rightward and rearward of the seat 5A of the operator's seat 6 via the blowing pipe 58 (see arrow Y2 in FIGS. 3, 4 and 10). With this, cool conditioned air is blown toward the vicinity of the back of the head of the operator OP seated on the operator's seat 6.

The second duct 54 is a duct to allow warm conditioned air from the switching box 52 to flow therethrough. The rear end portion of the second duct 54 is connected to the side connection port 52c of the switching box 52. The front-end portion of the second duct 54 is connected to the fourth duct 56. As shown in FIG. 4, the second duct 54 inclines such that the second duct 54 extends diagonally forward and downward. The second duct 54 is provided below the right manipulator 21. As shown in FIGS. 8, 10 and 12, the second duct 54 and the first portion 53a of the first duct 53 are arranged in the machine body width direction.

The third duct 55 is a duct to guide forward the cool conditioned air having flowed through the first duct 53. As shown in FIGS. 3, 4, 10 and 12, the third duct 55 extends forward from the front end of the first duct 53 and then bends to extend upward (diagonally forward and upward). The third duct 55 includes a second air outlet 55a. The second air outlet 55a is an air outlet through which cool conditioned air is blown out. The second air outlet 55a is located forward of the operator's seat 6. As shown in FIG. 4, the position (height) of the second air outlet 55a in the up-and-down direction overlaps that of the seat 6A of the operator's seat 6, and is located at or substantially at the height of the seating surface of the seat 6A. The second air outlet 55a has, at a position diagonally rightward and forward of the operator's seat 6, an opening facing leftward (or diagonally leftward and rearward). Cool conditioned air is blown toward a space forward of the legs (the vicinity of the knees) of the operator OP seated on the operator's seat 6 from the second air outlet 55a (see arrow Y12 in FIGS. 3, 4 and 10).

The fourth duct 56 is a duct to guide forward warm conditioned air having passed through the second duct 54. As shown in FIGS. 3, 4, 10 and 12, the fourth duct 56 extends forward from the front end of the second duct 54 and then bends to extend upward. The fourth duct 56 includes third air outlet(s) 56a. The third air outlet 56a is an air outlet through which warm conditioned air is blown out. The third air outlet 56a is provided in front of the operator's seat 6. The third air outlets 56a include a bottom air outlet 56a1, a side air outlet 56a2, and a top air outlet 56a3.

As shown in FIG. 4, the position of the bottom air outlet 56a1 in the up-and-down direction is lower than the seat 6A of the operator's seat 6. The bottom air outlet 56a1 has an opening facing downward (diagonally leftward and downward). The warm conditioned air blown from the bottom air outlet 56a1 flows toward the feet of the operator seated on the operator's seat 6 (see arrow Y13 in FIG. 4).

As shown in FIG. 4 and the like, the side air outlet 56a2 is located forward of the second air outlet 55a and the bottom air outlet 56a1. The position of the side air outlet 56a2 in the up-and-down direction is lower than the seating surface of the seat 6A of the operator's seat 6. The side air outlet 56a2 has an opening facing diagonally leftward and forward. The side air outlet 56a2 is an air outlet for defrosting. Warm conditioned air is blown from the side air outlet 56a2 diagonally leftward and forward (see arrow Y14 in FIG. 4). With this, it is possible to defog the front window of the cabin 5.

As shown in FIG. 4 and the like, the top air outlet 56a3 is located forward of the second air outlet 55a and the bottom air outlet 56a1. The position of the top air outlet 56a3 in the up-and-down direction is higher than the second air outlet 55a. The top air outlet 56a3 has an opening facing diagonally leftward and forward. The top air outlet 56a3 is an air outlet for defrosting. Warm conditioned air is blown from the top air outlet 56a3 diagonally leftward and forward (see arrow Y15 in FIGS. 3, 4 and 10). With this, it is possible to defog the front window of the cabin 5.

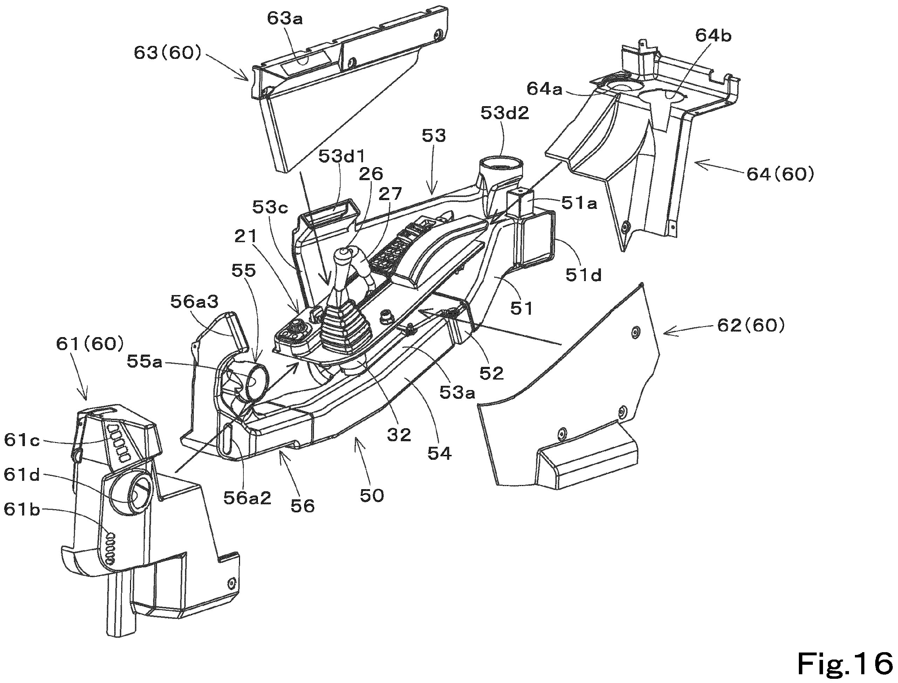

As shown in FIGS. 3, 4, 11 and 15, the working machine 1 includes cover member(s) 60 to cover the duct structure 50. As shown in FIG. 16, the cover members 60 include a first cover member 61, a second cover member 62, a third cover member 63, and a fourth cover member 64. Note that, only the third cover member 63 is illustrated in FIG. 4, and only the second cover member 62 is illustrated in FIG. 15.

The first cover member 61 covers a front portion of the duct structure 50. The first cover member 61 covers and surrounds the third duct 55 and the fourth duct 56. As shown in FIG. 11, the first cover member 61 includes a first vent 61a, a second vent 61b, a third vent 61c, and a fourth vent 61d. The first vent 61a is provided at a position corresponding to the bottom air outlet 56a1. The second vent 61b is provided at the side air outlet 56a2. The third vent 61c is provided at a position corresponding to the top air outlet 56a3. The fourth vent 61d is provided at a position corresponding to the second air outlet 55a. The display 33 is attached to the top end of the first cover member 61 via a bracket 37 (see FIG. 11 and the like).

The second cover member 62 covers the left side of the first portion 53a of the first duct 53, the left side of the second duct 54, the left side of the switching box 52, and the left side of a front portion of the relay duct 51. The second cover member 62 covers the left side of the portion of the duct structure 50 that is provided below the right manipulator 21.

The third cover member 63 covers the left and upper sides of the second portion 53b of the first duct 53. The third cover member 63 covers the portion of the second portion 53b that projects upward from the right manipulator 21. The third cover member 63 includes a fourth vent 63a at a position corresponding to the front air outlet 53d1.

The fourth cover member 64 covers the left and upper sides of a rear portion of the relay duct 51, and the upper side of a rear portion of the first duct 53. The fourth cover member 64 is provided rearward of the right manipulator 21. The fourth cover member 64 includes a first hole 64a at a position corresponding to the blowing pipe 58, and a second hole 64b at a position corresponding to the cup holder 57.

With the duct structure 50 covered by the cover members 60, it is possible to prevent or reduce the breakage or deformation of the duct structure 50. It is possible to prevent or reduce changes in temperature of the conditioned air flowing inside the duct structure 50.

As shown in FIGS. 9 and 10, the air conditioner body 29 is connected to an inside/outside-air switching device 65. The inside/outside-air switching device 65 is connected to the air inlet 29A1 of the housing 29A of the air conditioner body 29. The inside/outside-air switching device 65 is provided above the blower fan 29D of the air conditioner body 29. The inside/outside-air switching device 65 is provided rearward of the operator's seat 6. The inside/outside-air switching device 65 switches between a state in which outside air is allowed to enter the air conditioner body 29, and a state in which inside air is allowed to enter the air conditioner body 29.

As shown in FIG. 9, the inside/outside-air switching device 65 includes a housing 65a, and a switch damper 65b provided inside the housing 65a. The housing 65a includes an inside air intake 65c and an outside air intake 65d. The inside air intake 65c has an opening facing upward. The outside air intake 65d has an opening facing rearward. As indicated by arrow Y3, the switch damper 65b is swingable about a support shaft 52e. The switch damper 65b is swingable between a first position (position indicated by solid lines) to open the inside air intake 65c and close the outside air intake 65d, and a second position (position indicated by dot-dot-sash lines) to open the outside air intake 65d and close the inside air intake 65c. It is possible to perform the switching (swinging) of the switch damper 65b between the first position and the second position using a selection switch (not illustrated) provided in the vicinity of the operator's seat 6.

When the switch damper 65b is in the first position, air (inside air) inside the cabin 5 is taken in through the inside air intake 65c into the housing 65a, and supplied to the air conditioner body 29. When the switch damper 65b is in the second position, air (outside air) outside the cabin 5 is taken in through the outside air intake 65d into the housing 65a, and supplied to the air conditioner body 29. The air taken in through the outside air intake 65d is air (outside air) introduced through the outside air inlets 34.

As shown in FIGS. 9 and 10, an outside air duct 66 is connected to the outside air intake 65d of the inside/outside-air switching device 65. The outside air duct 66 is a duct to guide outside air to the outside air intake 65d. The outside air duct 66 extends in the front-rear direction, and its front portion is connected to the outside air intake 65d. The outside air duct 66 extends rearward from the outside air intake 65d, and increases in width (dimension in the machine body width direction) in the rearward direction.

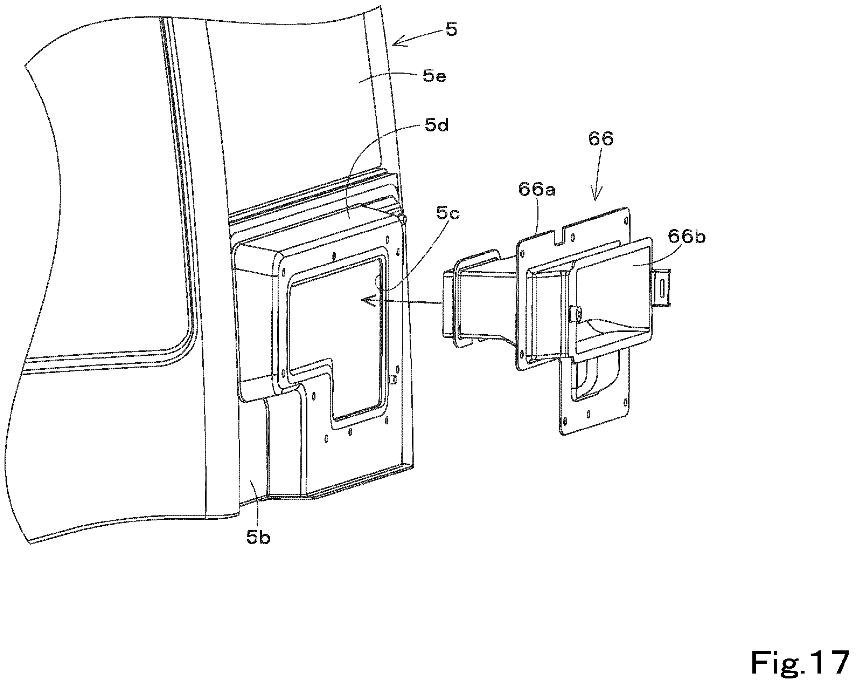

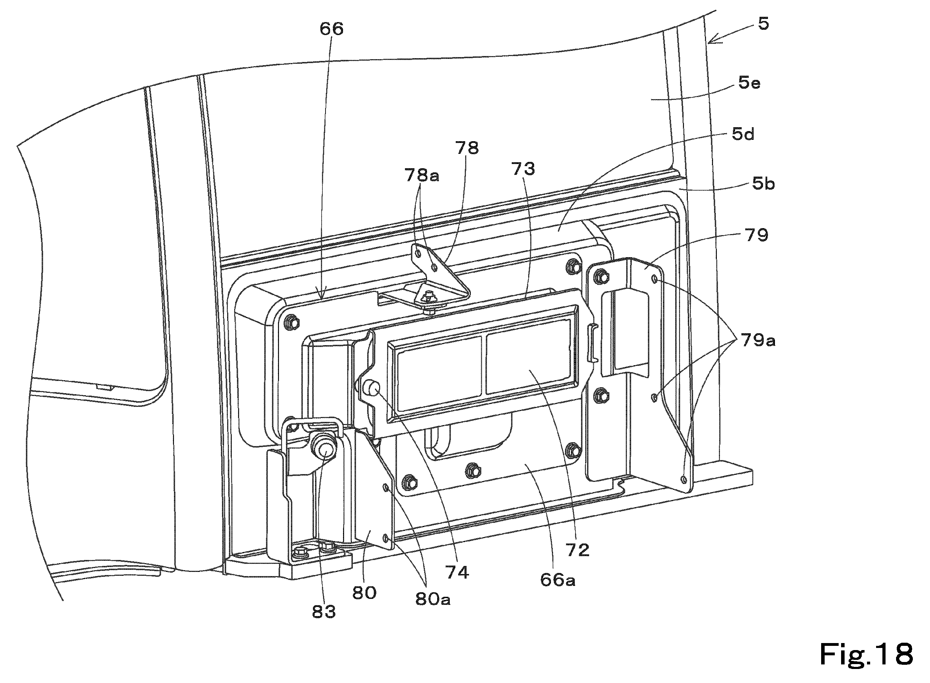

As shown in FIG. 17, the outside air duct 66 is attached to an opening 5c provided at a back surface 5b of the cabin 5. A bulging portion 5d bulging rearward such that the inner space at the rear portion of the cabin 5 expands is provided at the back surface 5b of the cabin 5. The bulging portion 5d includes the opening 5c. The opening 5c communicates with the inner space of the cabin 5. The outside air duct 66 includes a flange 66a. By fixing the bulging portion 5d and the flange 66a with fastener(s) such as bolt(s), the outside air duct 66 is fixed to the bulging portion 5d (see FIG. 18). In the state where the outside air duct 66 is fixed to the bulging portion 5d, the front portion of the outside air duct 66 is inserted through the opening 5c in the cabin 5 (see FIG. 9).

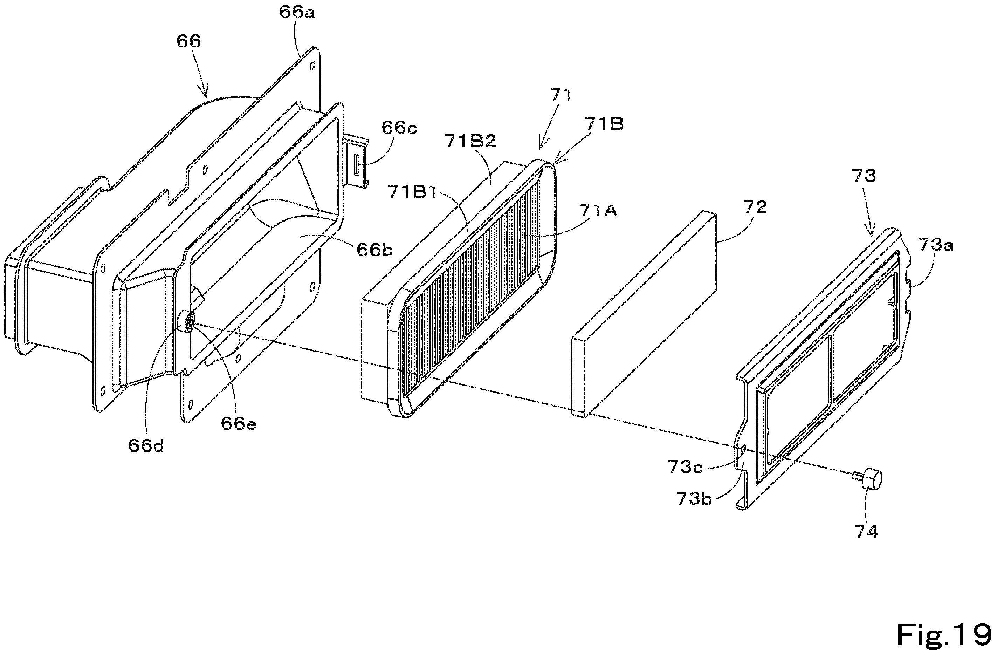

As shown in FIGS. 10 and 19, a first filter 71 and a second filter 72 are attached to the outside air duct 66. The first filter 71 and the second filter 72 are attached to a rear portion of the outside air duct 66.

As shown in FIG. 19, the first filter 71 includes a filter body 71A and a holding portion 71B to hold the filter body 71A. The filter body 71A is positioned such that the filter body 71A overlaps the second filter 72 in rear view. The holding portion 71B includes an outer periphery portion 71B 1 provided around the filter body 71A and an extension portion 71B2 extending rearward from the outer periphery portion 71B1. The extension portion 71B2 is a rectangular tube, and is fitted in an opening 66b at a rear portion of the outside air duct 66.

The first filter 71 and the second filter 72 are fixed to a rear portion of the outside air duct 66 by a frame 73. In other words, the frame 73 fixes the second filter 72 and the first filter 71 to the outside air duct 66. The frame 73 fixes the second filter 72 and the first filter 71, which are stacked on top of each other, to the outside air duct 66. As shown in FIG. 18, under the condition in which the second filter 72 is fixed by the frame 73, the second filter 72 is exposed through the opening of the frame 73.

As shown in FIG. 19, the frame 73 includes an engaged portion 73a and a fixed portion 73b. The engaged portion 73a is provided at a right portion of the frame 73. The engaged portion 73a is a portion to be engaged with the outside air duct 66. The outside air duct 66 includes an engagement hole 66c at a rear right portion thereof. By inserting the engaged portion 73a into the engagement hole 66c, the engaged portion 73a is engaged with the engagement hole 66c.

The fixed portion 73b is provided at a left portion of the frame 73. The fixed portion 73b is a portion to be fixed to the outside air duct 66. The fixed portion 73b includes a through-hole 73c. The outside air duct 66 includes, at a rear left portion thereof, a receiving portion 66d. The receiving portion 66d A includes a threaded hole 66e. By placing the through-hole 73c on the threaded hole 66e and inserting a knob bolt 74 through the through-hole 73c and screwing the knob bolt 74 into the threaded hole 66e, the fixed portion 73b is fixed to the receiving portion 66d.

In the state where the first filter 71 and the second filter 72 are stacked on top of each other in the front-rear direction, by engaging the engaged portion 73a of the frame 73 into the engagement hole 66c of the outside air duct 66, tightening the knob bolt 74 and fixing the fixed portion 73b of the frame 73 to the receiving portion 66d of the outside air duct 66, the frame 73 is fixed to the outside air duct 66 together with the first filter 71 and the second filter 72. When the knob bolt 74 is unscrewed to unfasten the fixed portion 73b from the receiving portion 66d, it is possible to detach the frame 73 from the outside air duct 66 to detach the first filter 71 and the second filter 72.

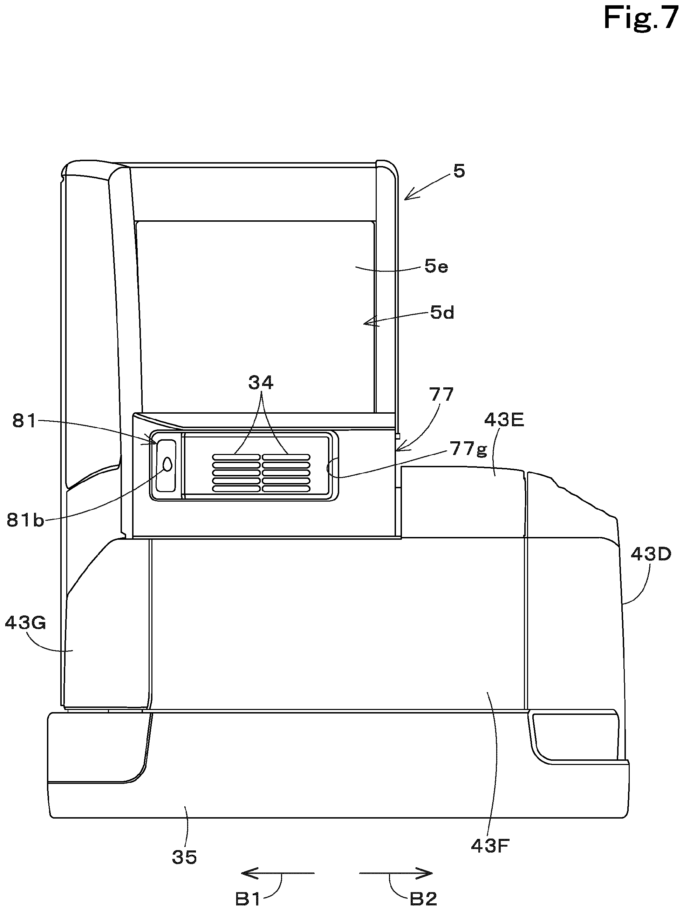

As shown in FIG. 10, the first filter 71 and the second filter 72 are arranged in the front-rear direction. The first filter 71 and the second filter 72 are arranged such that they overlap the outside air inlets 34 (see FIG. 7 and the like) in rear view. As shown in FIGS. 10 and 19, the first filter 71 is attached to the rear portion of the outside air duct 66. The second filter 72 is provided between the outside air inlets 34 and the first filter 71 in the front-rear direction. That is, the second filter 72 is located closer to the outside air inlets 34 than the first filter 71 is.

The first filter 71 and the second filter 72 remove foreign matter from the outside air taken in through the outside air inlets 34. Specifically, first, the second filter 72 removes foreign matter from the outside air taken in through the outside air inlets 34, and then the first filter 71 removes foreign matter from the outside air which passed through the second filter 72.

The second filter 72 is coarser than the first filter 71. In other words, the first filter 71 is finer than the second filter 72. That is, the first filter 71 is a fine filter that can remove finer foreign matter than the second filter 72. Since the second filter 72 is located closer to the outside air inlets 34 than the first filter 71 is, clogging of the fine mesh first filter 71 is less likely to occur, and it is possible to increase the lifetime of the first filter 71.

As indicated by arrow Y4 in FIG. 10, the outside air taken in through the outside air inlets 34 and passed through the first filter 71 and the second filter 72 is guided by the outside air duct 66 to the outside air intake 65d of the inside/outside-air switching device 65, and is guided to the air conditioner body 29.

As shown in FIGS. 1, 2, 5, 6, and 7, the back surface 5b of the cabin 5 has attached thereto a rear cover 77 projecting rearward from the back surface 5b. The outside air inlets 34 are provided in the rear cover 77. The rear cover 77 is provided at a lower portion (below the rear window 5e) of the back surface 5b of the cabin 5. The rear cover 77 is detachably attached to the back surface 5b of the cabin 5.

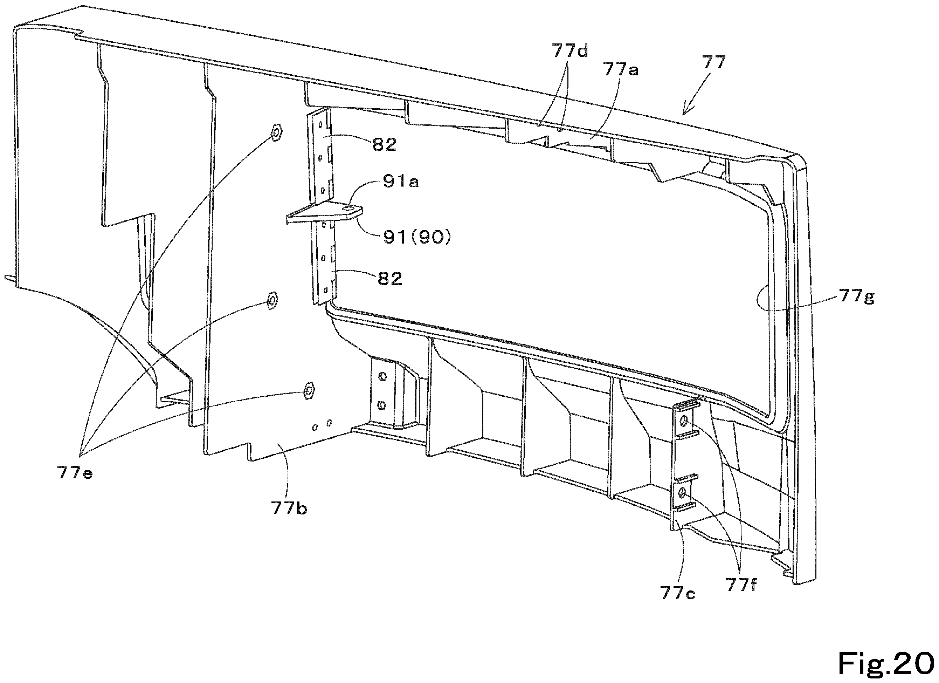

As shown in FIG. 20, the rear cover 77 includes a first attachment portion 77a, a second attachment portion 77b, and a third attachment portion 77c. The first attachment portion 77a includes first attachment hole(s) 77d. The second attachment portion 77b includes second attachment hole(s) 77e. The third attachment portion 77c includes third attachment hole(s) 77f. As shown in FIG. 18, a first bracket 78, a second bracket 79, and a third bracket 80 are attached to a lower portion of the back surface 5b of the cabin 5. The first bracket 78 includes first receiving hole(s) 78a. The second bracket 79 includes second receiving hole(s) 79a. The third bracket 80 includes third receiving hole(s) 80a. The rear cover 77 is attached to the back surface 5b of the cabin 5 by, using bolts and nuts, fastening the first attachment hole(s) 77d and the first receiving hole(s) which are stacked together, the second attachment hole(s) 77e and the second receiving hole(s) 79a which are stacked together, and the third attachment hole(s) 77f and the third receiving hole(s) 80a which are stacked together.

As shown in FIGS. 1, 5, 6, 7 and the like, the rear cover 77 is provided above the sixth cover 43F. As shown in FIG. 1, the position of the rear cover 77 in the up-and-down direction overlaps that of the operator's seat 6. The upper end of the rear cover 77 is located lower than the upper end of the operator's seat 6. The lower end of the rear cover 77 is located higher than the lower end of the operator's seat 6. As shown in FIG. 2, the position of the rear cover 77 in the machine body width direction overlaps that of the operator's seat 6. The right end of the rear cover 77 is located leftward of the right end of the operator's seat 6. The left end of the rear cover 77 is located leftward of the left end of the operator's seat 6 or at the same position or substantially at the same position as the left end of the operator's seat 6. The width of the rear cover 77 (dimension in the machine body width direction) is longer than the width of the operator's seat 6 (dimension in the machine body width direction).

The rear cover 77 covers the rear side of the air conditioner body 29 provided inside the cabin 5. The front portion of the air conditioner body 29 is provided inside of the cabin 5. The rear portion of the air conditioner body 29 projects rearward from the cabin 5. The rear cover 77 covers the rear portion of the air conditioner body 29 that projects rearward from the cabin 5. However, the rear portion of the air conditioner body 29 does not need to project rearward from the cabin 5. That is, the entirety of the air conditioner body 29 may be provided inside the cabin 5 (in front of the rear cover 77). At least the first filter 71, the second filter 72, and the outside air duct 66 are provided inside the rear cover 77 (see FIG. 10).

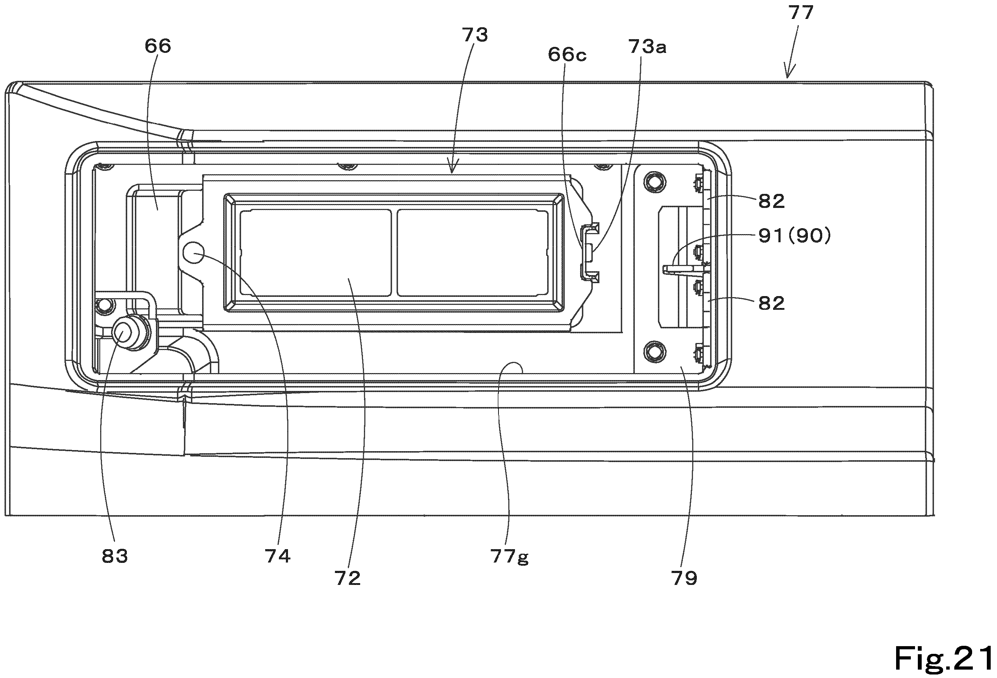

As shown in FIGS. 1, 2, 5, 6, 7 and 10, the rear cover 77 includes a lid 81. In the lid 81 is a rectangle longer in the machine body direction than in the up-and-down direction in rear view. As shown in FIGS. 20 and 21, the rear cover 77 includes a rear portion opening 77g, and the lid 81 is attached to cover the rear portion opening 77g. The lid 81 is openable and closeable relative to the rear cover 77 (see arrow Y5 of FIG. 2). When the lid 81 is open, the second filter 72 and the frame 73 are exposed through the rear portion opening 77g (see FIG. 21). With this, it is possible to remove the frame 73 from the outside air duct 66 to perform replacement or the like of the first filter 71 and the second filter 72.

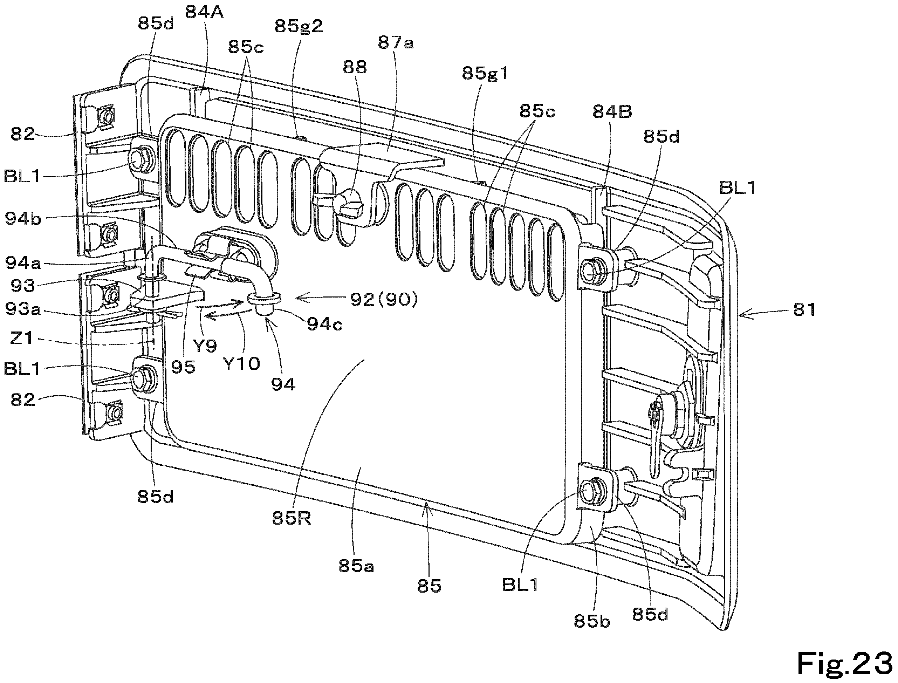

As shown in FIG. 23, hinge(s) 82 is/are attached to a right edge portion of the lid 81. The hinge 82 is attached to the right edge of the rear portion opening 77g of the rear cover 77 (see FIGS. 20 and 21). With this, the lid 81 is openable about the hinge 82 in a direction diagonally rightward and rearward (see arrow Y5 in FIG. 2). The lid 81 includes a keyhole 81b in a left portion thereof. By inserting a key into the keyhole 81b and turning (locking) the key, it is possible to bring the lid 81 into an unopenable state.

As shown in FIG. 21, cushioning 83 is provided in the vicinity of the left edge of the rear portion opening 77g in the rear cover 77. The cushioning 83 includes an elastic body such as a rubber. The cushioning 83 is positioned such that the cushioning 83 faces the rear portion opening 77g. When the lid 81 is closed, the cushioning 83 abuts the front surface of the lid 81 to elastically deform. With this, it is possible to eliminate or reduce the likelihood that the lid 81 will rattle when the lid 81 is closed.

As shown in FIGS. 5, 6, 7, 22 and the like, the outside air inlets 34 are provided in the lid 81. The outside air inlets 34 are openings to allow air outside the cabin 5 (outside air) to be introduced therethrough into the cabin 5. Outside air is introduced through the outside air inlets 34 by driving the blower fan 29D of the air conditioner body 29.

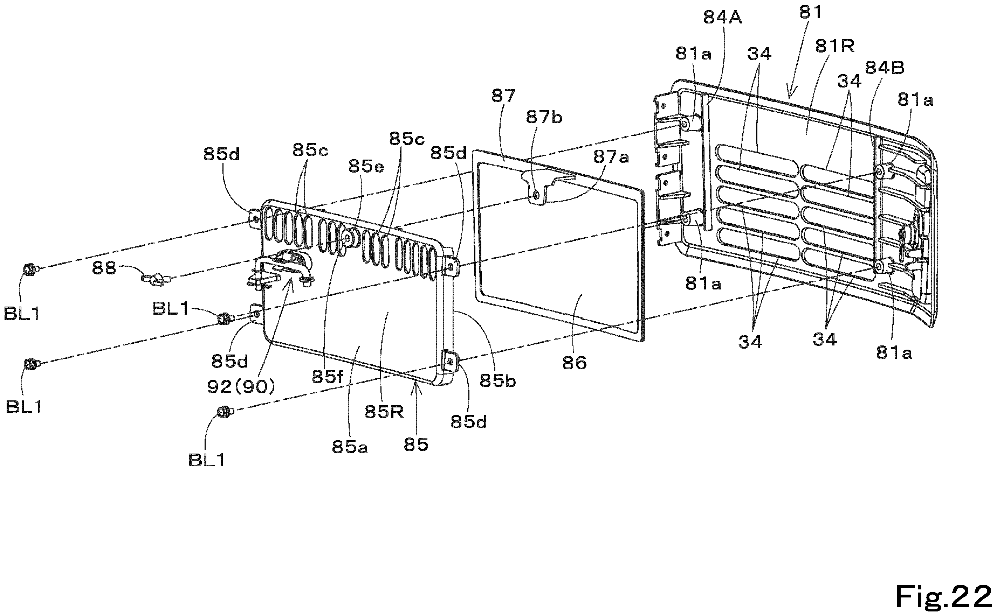

A plurality of (ten in the illustrated example) the outside air inlets 34 are provided. In the case of the present embodiment, the outside air inlets 34 are elongated holes longer in the machine body width direction than in the up-and-down direction. As shown in FIG. 22, the lid 81 includes, at an upper portion thereof, an area 81R where no outside air inlets 34 are provided. In other words, the outside air inlets 34 are not provided in the area 81R at the upper portion of the lid 81.

As shown in FIG. 22, a first rib 84A and a second rib 84B are provided on the front surface of the lid 81. The first rib 84A is provided at a right portion of the front surface of the lid 81. The second rib 84B is provided at a left portion of the front surface of the lid 81. The first rib 84A and the second rib 84B extend parallel to each other and each extend in the up-and-down direction.

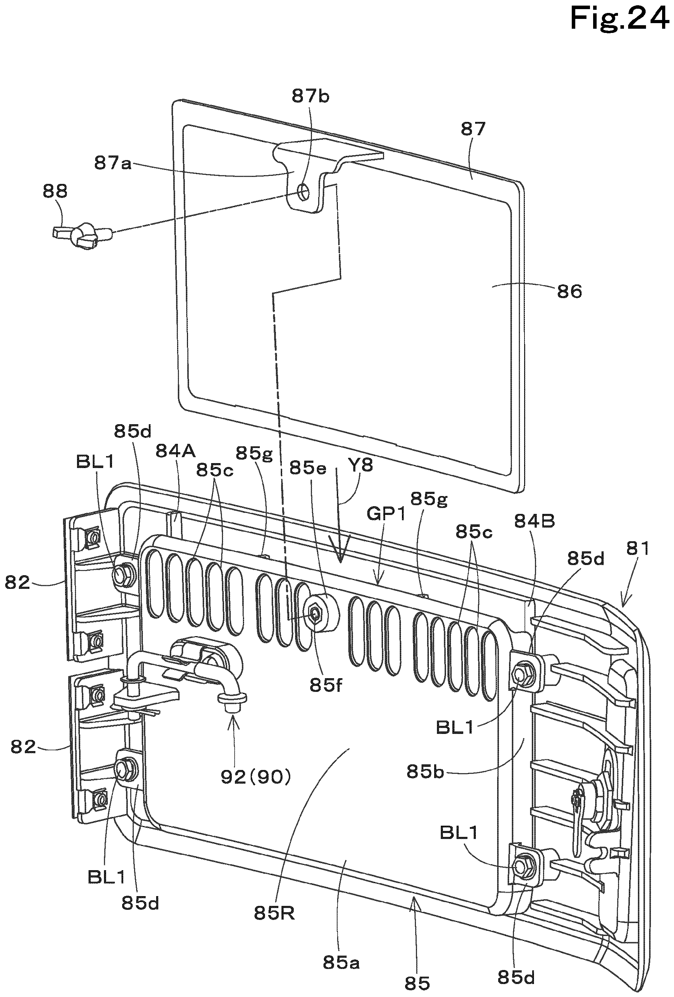

As shown in FIG. 23, a case 85 is attached to a front portion (front surface) of the lid 81. As shown in FIG. 24, a net 86 is housed in the case 85. The net 86 is an insect catching net to catch insects and/or the like entering through the outside air inlets 34. The net 86 is coarser than the second filter 72.

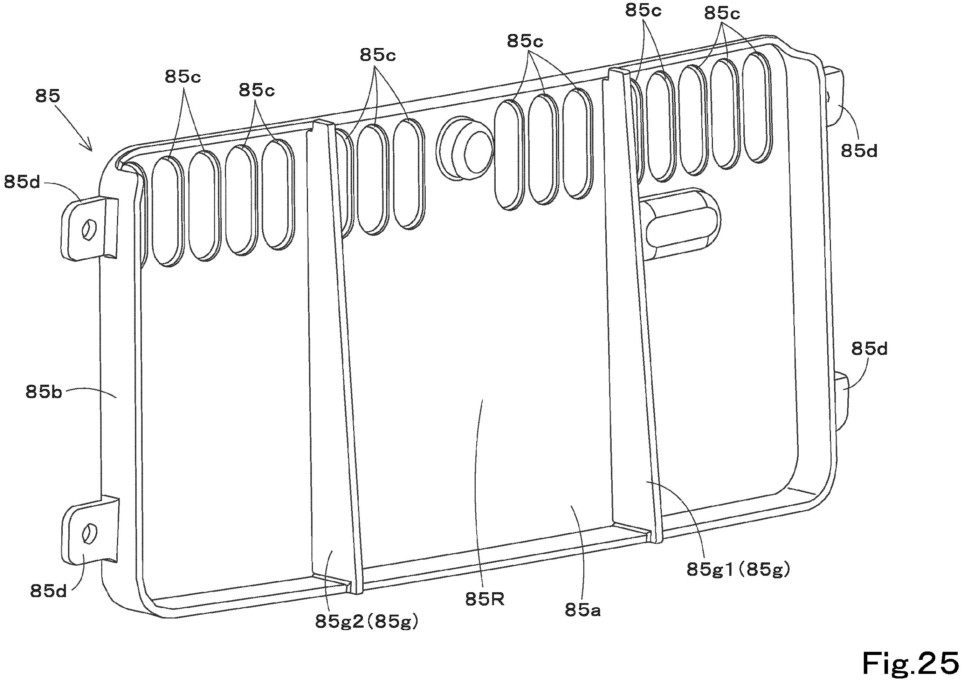

As shown in FIG. 25 and the like, the case 85 includes a front panel 85a and a peripheral wall 85b. In rear view, the front panel 85a is a rectangle longer in the machine body direction than in the up-and-down direction length. As shown in FIGS. 23, 24, 25 and the like, the front panel 85a includes opening(s) 85c. A plurality of (sixteen in the illustrated example) the openings 85c are provided. In the case of the present embodiment, the openings 85c are elongated holes longer in the up-and-down direction than in the machine body width direction. The openings 85c allow passage of outside air taken in through the outside air inlets 34. The front panel 85a includes, at a lower portion thereof, an area 85R where no openings 85c are provided. In other words, the openings 85c are not provided in the area 85R at the lower portion of the front panel 85a.

As shown in FIG. 22, the front panel 85a is positioned such that the front panel 85a faces the outside air inlets 34. The net 86 is provided rearward of the front panel 85a. The peripheral wall 85b extends rearward from the outer edge of the front panel 85a. Attachment portion(s) 85d is/are provided on the peripheral wall 85b. By inserting bolts BL1 through the attachment portions 85d and screwing the bolts BL1 into receiving portions 81a provided on the front surface of the lid 81, the case 85 is attached to the front portion of the lid 81.

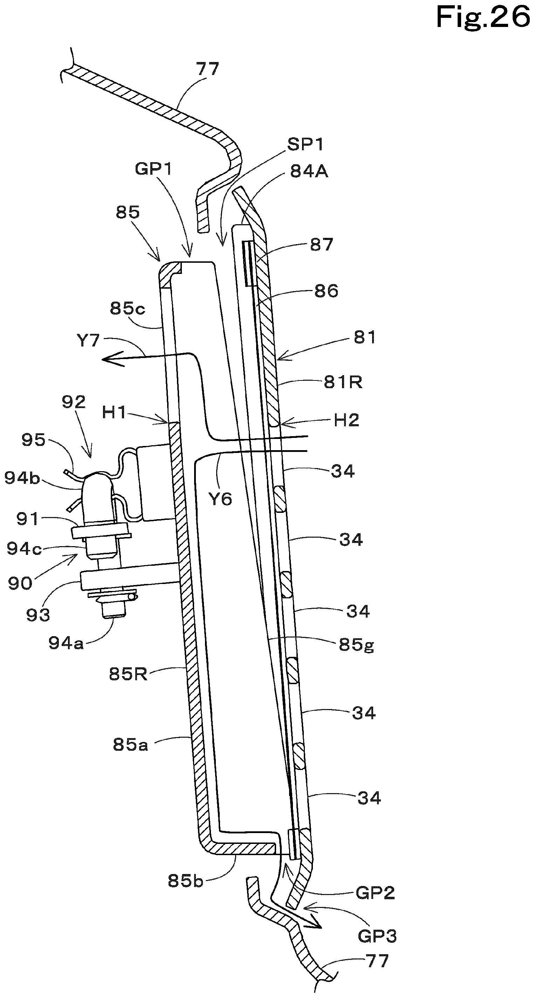

As shown in FIG. 26, when the case 85 is attached to the front portion of the lid 81, a space SP1 is defined between the front panel 85a and the lid 81. The net 86 can be provided in the space SP1. In the state where the net 86 is located in the space SP1, the net 86 is provided between the first rib 84A and the second rib 84B (see FIG. 23).

As shown in FIG. 26, the net 86 is positioned in the vicinity of the lid 81 such that the net 86 faces the outside air inlets 34 of the lid 81. Thus, the net 86 is located closer to the outside air inlets 34 than the second filter 72 (see FIG. 10) provided at a position away from the lid 81. That is, when the net 86 is provided in the space SP1, the net 86 is provided between the outside air inlets 34 and the second filter 72. With this, it is possible to catch insects and/or the like entered through the outside air inlets 34 using the net 86 before the insects reach the second filter 72.

As shown in FIG. 26, in the state where the case 85 is attached to the front portion of the lid 81, the openings 85c are located higher than the outside air inlets 34. That is, the height H1 of the lower edge of the openings 85c is higher than the height H2 of the upper edge of the outside air inlets 34. In other words, the outside air inlets 34 are provided such that the outside air inlets 34 face the area 85R with no openings 85c. The openings 85c are provided such that the openings 85c face the area 81R with no outside air inlets 34. With this, when the working machine 1 is cleaned using water, since the washing water entered through the outside air inlets 34 hits the area 85R and flows down, it is possible to eliminate or reduce the likelihood that the washing water will enter the openings 85c (see arrow Y6 in FIG. 26). The washing water that hit the area 85R and flowed down passes through a gap GP2 between the front panel 85a and the net 86 and a gap GP3 between the lid 81 and the rear cover 77, and goes out of the machine body 2. On the other hand, the outside air taken in through the outside air inlets 34 can move upward and enter the openings 85c (see arrow Y7 in FIG. 26).

As shown in FIG. 25, the peripheral wall 85b of the case 85 extends rearward from a lower portion, a left portion, and a right portion of the outer edge of the front panel 85a. That is, the peripheral wall 85b is not provided at an upper edge of the front panel 85a. With this, when the case 85 is attached to the front portion of the lid 81, a large gap GP1 is defined between the case 85 and the lid 81 at an upper portion of the case 85 (see FIGS. 24 and 26). Thus, it is possible to place the net 86 into the case 85 from above the case 85 through the gap GP1 (see arrow Y8 in FIG. 24). It is also possible to remove the net 86 from the case 85 through the gap GP1 through the space above the case 85. When the net 86 is placed in and removed from the case 85, the first rib 84A and the second rib 84B function as guides to guide the movements of the net 86.

As shown in FIGS. 22 and 24, a holding frame 87 to hold the net 86 is provided around the net 86. The holding frame 87 has a rectangular annular shape. The holding frame 87 is provided, at an upper portion thereof, with a fixing portion 87a to be used to fix the holding frame 87 and the net 86 to the case 85. The fixing portion 87a extends forward from an upper portion of the holding frame 87 and then bends to extend downward. The fixing portion 87a includes a through-hole 87b.

As shown in FIGS. 22 and 24, a receiving portion 85e is provided on the front surface of the front panel 85a of the case 85. The receiving portion 85e is a portion to have the fixing portion 87a fixed thereto. The receiving portion 85e projects forward from an upper portion of the front panel 85a. The receiving portion 85e includes a threaded hole 85f. In the state where the net 86 is housed in the case 85, by inserting a wing bolt 88 through the through-hole 87b of the fixing portion 87a and screwing the wing bolt 88 into the threaded hole 85f of the receiving portion 85e, it is possible to fix the holding frame 87 to the case 85. With this, the net 86 is fixed in place relative to the case 85. By removing the wing bolt 88 from the threaded hole 85f, the holding frame 87 is unfastened from the case 85. With this, it is possible to remove the holding frame 87 and the net 86 from the case 85.

As shown in FIG. 25, the case 85 includes projecting portion(s) 85g projecting rearward (toward the outside air inlets 34) from the front panel 85a. The projecting portions 85g include a first projecting portion 85g1 provided at a left portion of the front panel 85a, and a second projecting portion 85g2 provided at a right portion of the front panel 85a. The first projecting portion 85g1 and the second projecting portion 85g2 each extend in the up-and-down direction and extend parallel to each other. The extent to which the projecting portion 85g projects increases in the top-to-bottom direction.

As shown in FIG. 26, when the case 85 is attached to the front portion of the lid 81, the projecting portions 85g abut the front surface of the net 86. With this, the net 86 is pressed toward the lid 81 by the projecting portions 85g, and abuts or is present near the outside air inlets 34. Since the extent to which the projecting portions 85g project increases in the top-to-bottom direction, it is possible to reliably cause the projecting portions 85g to abut the front surface of the net 86. Since the extent to which the projecting portions 85g project is small at an upper portion, it is possible to easily perform work to place the net 86 into the case 85 from above.

The working machine 1 includes a holding portion 90 to hold the lid 81 in the open state. The holding portion 90 includes a holding member 91 provided at the rear cover 77 (see FIGS. 20, 21 and 26), and a holding mechanism 92 provided at the case 85 (see FIGS. 22, 23 and 26).

As shown in FIGS. 20 and 21, the holding member 91 is provided at the outer edge of the rear portion opening 77g of the rear cover 77. Specifically, the holding member 91 projects from a right portion of the outer edge of the rear portion opening 77g of the rear cover 77 leftward (toward the center of the rear portion opening 77g). The holding member 91 is provided between the two hinges 82 arranged in the up-and-down direction. The holding member 91 is a flat plate including opposite surfaces one of which faces upward and the other of which faces downward. The holding member 91 includes a through-hole 91a extending in the up-and-down direction.

As shown in FIGS. 22 and 23, the holding mechanism 92 is provided at the front surface of the front panel 85a of the case 85. The holding mechanism 92 includes a support portion 93, a stay 94, and an engagement portion 95. The support portion 93 projects forward from the front surface of the front panel 85a. The support portion 93 includes a through-hole 93a extending in the up-and-down direction. The support portion 93 supports the stay 94 rotatably about an axis Z1 in the up-and-down direction. The stay 94 includes a first portion 94a, a second portion 94b, and a third portion 94c. The first portion 94a extends in the up-and-down direction, and is inserted from above into the through-hole 93a in the support portion 93. The second portion 94b bends from the upper end of the first portion 94a and extends in a horizontal direction. The third portion 94c bends from the second portion 94b and extends downward. The third portion 94c is spaced from the first portion 94a and is provided in parallel to the first portion 94a.

The engagement portion 95 is provided at the front surface of the front panel 85a, and is configured to have the second portion 94b of the stay 94 engaged therewith. The engagement portion 95 is obtained by bending a metallic plate with spring properties. The engagement portion 95 can detachably hold the second portion 94b by the spring properties of the metallic plate. The second portion 94b is held by being pinched by the metallic plate from above and below. By causing the stay 94 to rotate in a first direction about the axis Z1 (direction of arrow Y9 in FIG. 23), it is possible to engage the second portion 94b with the engagement portion 95. By causing the stay 94 to rotate in a second direction about the axis Z1 (direction of arrow Y10 in FIG. 23), it is possible to disengage the second portion 94b from the engagement portion 95. In the state where the second portion 94b is disengaged from the engagement portion 95, it is possible to move the stay 94 within a predetermined range along the through-hole 93a in the up-and-down direction.

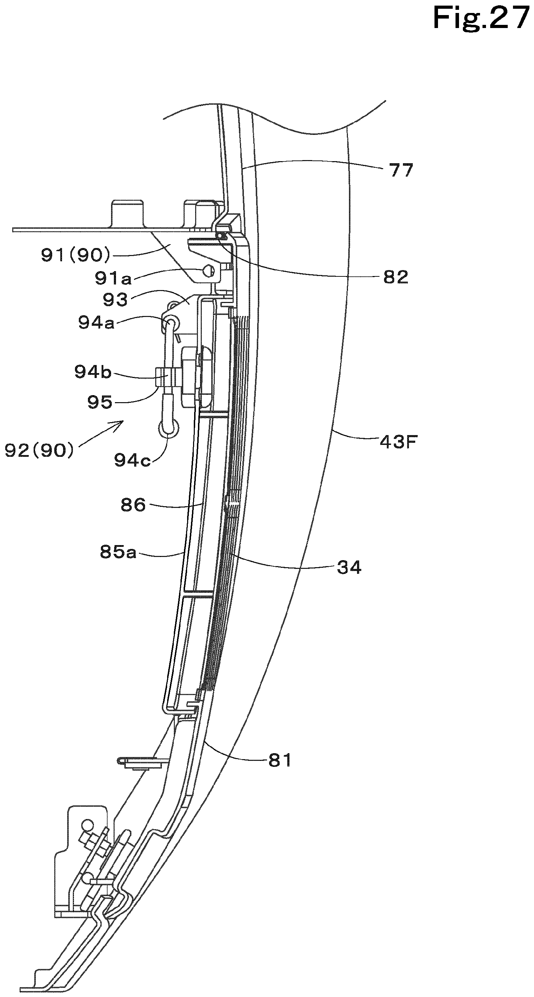

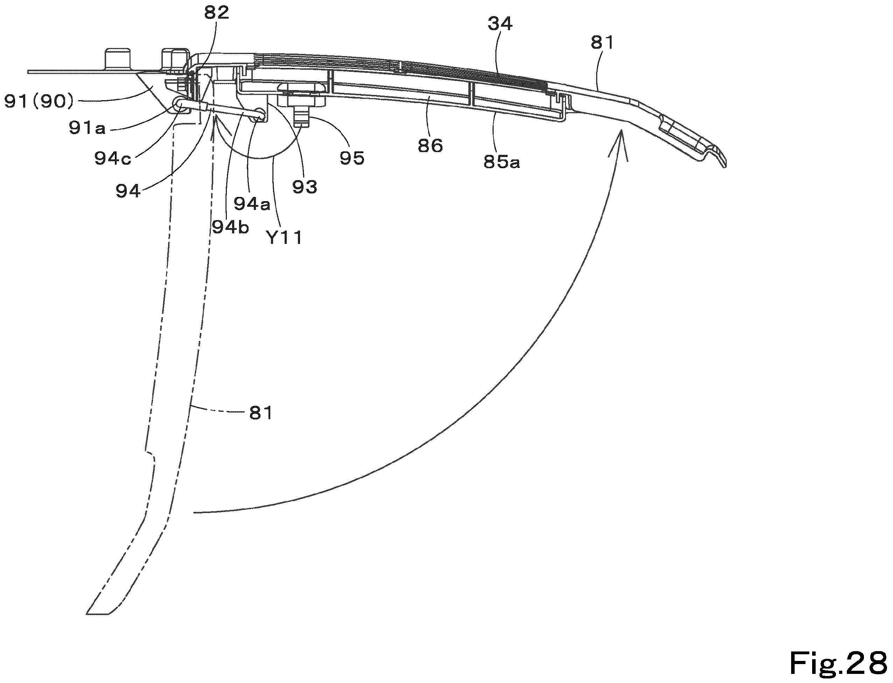

In the state where the lid 81 is closed, the second portion 94b of the stay 94 is engaged with the engagement portion 95 (see FIGS. 23 and 27). After the lid 81 is opened, in the case where the lid 81 is to be kept open, the stay 94 is caused to rotate in the second direction about the axis Z1 (direction of arrow Y10 in FIG. 23, direction of arrow Y11 in FIG. 28) to disengage the second portion 94b from the engagement portion 95, and the third portion 94c is inserted from above into the through-hole 91a in the holding member 91 (see FIG. 28). With this, since the movement of the lid 81 is restricted by the stay 94, the lid 81 cannot be closed anymore, and the open state of the lid 81 is maintained. With this, when maintenance (filter replacement or the like) is performed with the lid 81 open, it is possible to eliminate or reduce the likelihood that the lid 81 will close unintendedly, making it possible to improve maintainability.

As has been described, the working machine 1 includes a filter structure including a net 86, a first filter 71 and a second filter 72 to remove foreign matter from outside air introduced through the outside air inlets 34. The outside air introduced through the outside air inlets 34 into the rear cover 77 passes through the net 86, the second filter 72, and then the first filter 71 (in this order). With this, the foreign matter contained in the outside air is removed. The outside air from which foreign matter has been removed is supplied from the inside/outside-air switching device 65 to the air conditioner body 29. The air conditioner body 29 generates conditioned air, and the generated conditioned air is blown into the foregoing duct structure 50.

The connection structure of the duct structure 50 will now be described.

As described earlier, the duct structure 50 includes a relay duct 51, a switching box 52, a first duct 53, a second duct 54, a third duct 55, and a fourth duct 56 (see FIGS. 12 and 13).

That is, the duct structure 50 includes a plurality of ducts (including the switching box 52) connected together. Thus, the duct structure 50 includes one duct and another duct connected together.

Specifically, the duct structure 50 includes the relay duct (one duct) 51 and the switching box (another duct) 52 connected together. The duct structure 50 includes the switching box (one duct) 52 and the first duct (another duct) 53 connected together. The duct structure 50 includes the switching box (one duct) 52 and the second duct (another duct) 54 connected together. The duct structure 50 includes the first duct (one duct) 53 and the third duct (another duct) 55 connected together. The duct structure 50 includes the second duct (one duct) 54 and the fourth duct (another duct) 56 connected together.

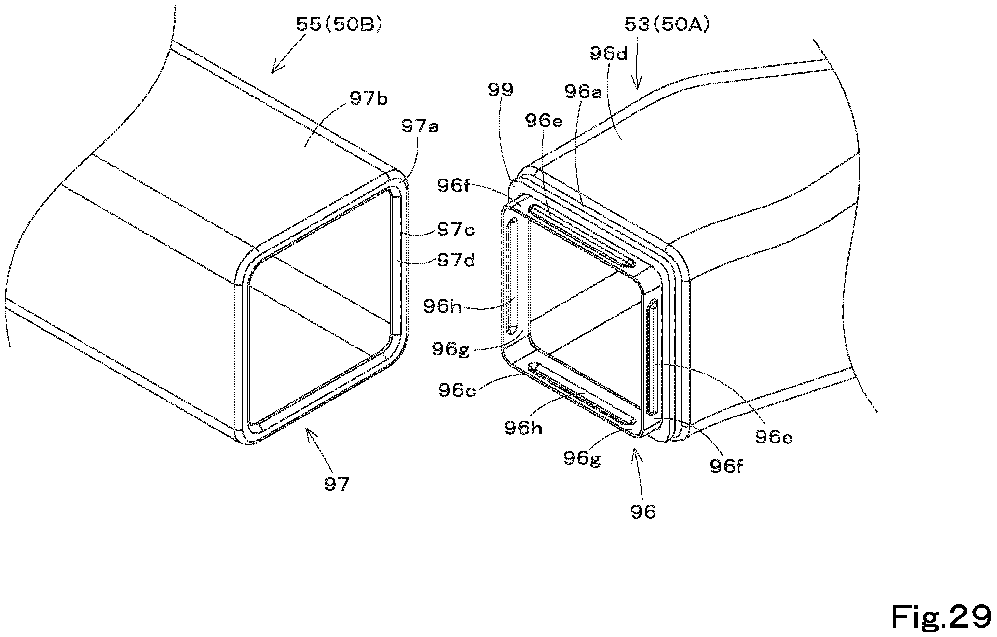

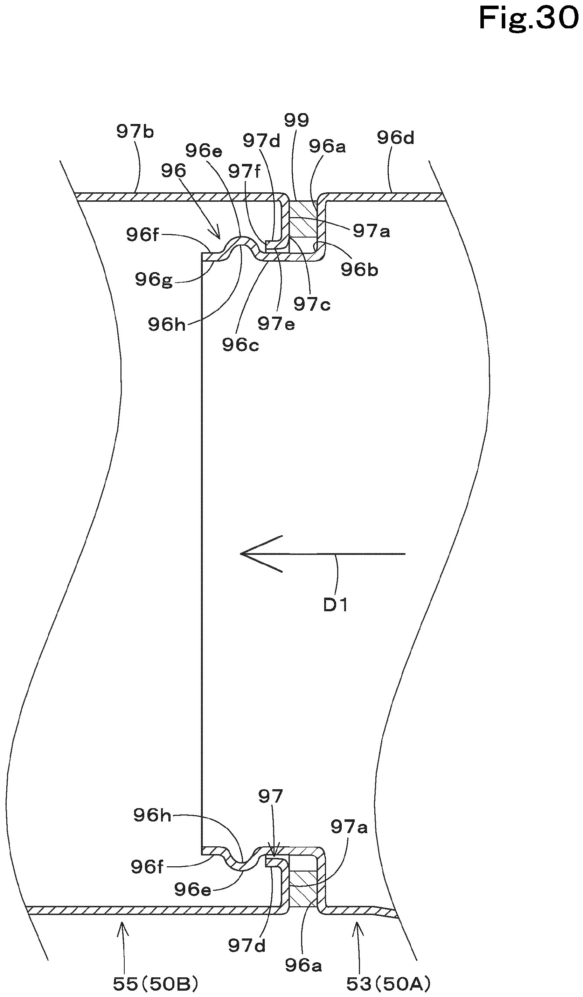

FIGS. 29 and 30 each illustrate a case where one duct 50A is the first duct 53, and another duct 50B is the third duct 55. The one duct 50A (first duct 53) includes a first connector portion 96 inserted into and connected to the another duct 50B (third duct 55). The another duct 50B (third duct 55) includes a second connector portion 97 to receive and to be connected to the one duct 50A (first duct 53).

The first connector portion 96 includes a first end surface 96a perpendicular to a direction D1 of insertion of the one duct 50A (first duct 53). The first connector portion 96 includes a tubular portion 96c extending from a radially innermost portion 96b of the first end surface 96a toward the another duct 50B (third duct 55). The first end surface 96a is a surface extending from an outer peripheral surface 96d of the one duct 50A (first duct 53) inward (in the direction approaching the central axis of the duct 50A). The first end surface 96a is an annular (rectangular annular) flat surface. The first end surface 96a is provided to surround the outer periphery of the tubular portion 96c.

The tubular portion 96c is provided with projection(s) 96e on the outer surface thereof. The projection 96e projects from an outer surface 96f of the tubular portion 96c outward (in a direction away from the central axis of the duct 50A). The projection 96e is elongated in a direction perpendicular to the insertion direction D1. In other words, the projection 96e is a projecting ridge extending along a circumferential direction of the tubular portion 96c. The projection 96e may be provided on the entire perimeter of the tubular portion 96c, or may be provided only on a portion of the perimeter of the tubular portion 96c. In the present embodiment, the projection 96e is provided on each of the four outer surfaces 96f of the rectangular tubular portion 96c. Each projection 96e projects in the form of an arc from the corresponding outer surface 96f of the tubular portion 96c. An inner surface 96g of the tubular portion 96c includes, at a position corresponding to the projection 96e, a recess 96h recessed toward the outer surface.

As shown in FIG. 30, the second connector portion 97 includes a second end surface 97a which faces the first end surface 96a. The second end surface 97a is also a surface perpendicular to the insertion direction D1. The second end surface 97a is parallel to the first end surface 96a. As shown in FIGS. 29 and 30, the second end surface 97a is a surface extending inward (in a direction approaching the central axis of the duct) from an outside edge 97b of the another duct 50B (third duct 55). The second end surface 97a is an annular (rectangular annular) flat surface.

The second connector portion 97 includes a folded portion 97d folded from a radially innermost portion 97c of the second end surface 97a in a direction away from the first end surface 96a (in a direction opposite to the insertion direction D1). The folded portion 97d may be provided at the entire perimeter of the radially innermost portion 97c of the second end surface 97a, or may be provided only at a portion of the perimeter of the radially innermost portion 97c of the second end surface 97a. In the present embodiment, the folded portion 97d is provided along the entire perimeter of the radially innermost portion 97c of the second end surface 97a.

In the state where the one duct 50A (first duct 53) is inserted in and connected to the another duct 50B (third duct 55), the tubular portion 96c of the first connector portion 96 is inserted in the another duct 50B (third duct 55) (see FIG. 30). In this state, an inner surface 97e of the folded portion 97d is located inward of the ridge (radially outermost portion) of each projection 96e (located closer to the center of the tubular portion 96c than the ridge is). Furthermore, an edge 97f located forward of the folded portion 97d in the insertion direction D1 is located rearward of each projection 96e in the insertion direction D1. With this, the folded portion 97d is engaged with the tubular portion 96c, and the another duct 50B (third duct 55) is less likely to fall off from the one duct 50A (first duct 53). That is, the one duct 50A and the another duct 50B are connected.

The one duct 50A and the another duct 50B can be produced using a flexible synthetic resin. With this, when the one duct 50A and the another duct 50B are attached to or detached from each other, the folded portion 97d is pushed by the projections 96e and bends outward (undergoes elastic deformation). Thus, it is possible to easily attach and detach the first duct and the second duct.

In the state where the one duct 50A (first duct 53) is inserted in and connected to the another duct 50B (third duct 55), the folded portion 97d abuts or is located near the outer surface 96f of the tubular portion 96c (specifically, the portion of the outer surface 96f that is located rearward of the projections 96e in the insertion direction D1) (see FIG. 30). With this, it is possible to eliminate o reduce the likelihood that the junction of the one duct 50A and the another duct 50B will rattle.

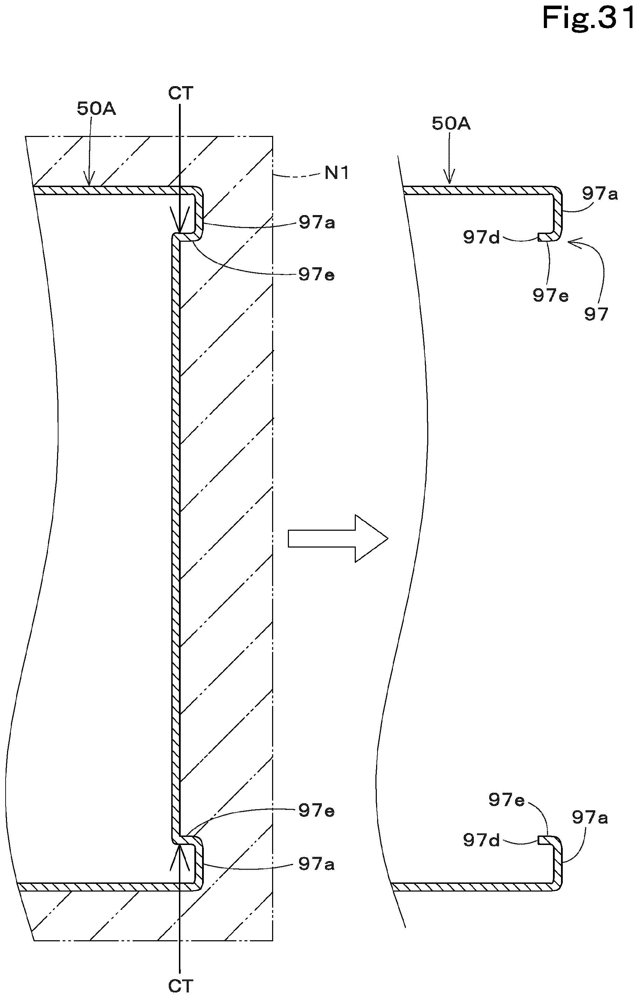

Since the second connector portion 97 of the another duct 50B includes the folded portion 97d as described above, in the case where the another duct 50B is produced by blow molding, it is possible to produce the inner surface of the second connector portion 97 (inner surface 97e of the folded portion 97d) with high precision. This is described below with reference to FIG. 31.

As shown in FIG. 31, when the another duct 50B is produced by blow molding, first, heated resin is formed by an extruder into a container shape called "parison" and expanded within a metal mold N1 to have a shape complementary to the metal mold (see the left part of FIG. 31). After that, an unnecessary portion is cut off with a cutter (the cut portion is indicated by arrow CT in FIG. 31), so that the another duct provided with the second connector portion 97 including the folded portion 97d is obtained. Since the inner surface (inner surface 97e of the folded portion 97d) of the second connector portion 97 of the another duct 50B produced in such a way is molded by the surface of the metal mold N1, the dimensional accuracy of the inner surface is very high. Thus, rattling does not occur when the another duct is connected to the one duct.

In the case where another duct including no folded portion 97d, like a known duct, is produced by blow molding, the inner surface of the connector portion is a cut surface formed with a cutter (manually cut surface). Thus, the dimensional accuracy of the inner surface of the connector portion is low, and rattling would occur when the another duct is connected to the one duct.

As shown in FIG. 30, cushioning 99 is interposed between the first end surface 96a and the second end surface 97a. The cushioning 99 includes an elastic body such as a rubber. The base material for the cushioning 99 may be ethylene propylene diene monomer (EPDM) rubber, for example.

The cushioning 99 is bonded to the first end surface 96a or the second end surface 97a. In the present embodiment, the cushioning 99 is bonded to the first end surface 96a. However, the cushioning 99 may be bonded to the second end surface 97a. As shown in FIG. 29, the cushioning 99 is an annular (rectangular annular) member. The cushioning 99 is provided to surround the outer perimeter of the tubular portion 96c.

In the state where the one duct 50A (first duct 53) is inserted in and connected to the another duct 50B (third duct 55), the cushioning 99 is provided between the first end surface 96a and the second end surface 97a. In this state, the cushioning 99 abuts the first end surface 96a and the second end surface 97a. In this state, the cushioning 99 may abut the first end surface 96a, the second end surface 97a, and the outer surface of the tubular portion 96c.

With the foregoing duct connection configuration, since the cushioning 99 is interposed between the first end surface 96a perpendicular to the insertion direction D1 and the second end surface 97a facing the first end surface 96a, when the one duct 50A and the another duct 50B are attached to or detached from each other, the inner surfaces of the ducts are not rubbed against the outer surface of the cushioning 99. With this, when the one duct 50A and the another duct 50B are attached to or detached from each other, it is possible to eliminate or reduce the likelihood that the cushioning 99 will come off.

In the case of a known duct connection configuration (for example, the connection configuration disclosed in Patent Literature 1 described earlier), when the one duct and the another duct are attached to or detached from each other, since the inner surface of a duct is rubbed against the outer surface of the cushioning 99, if cushioning 99 made of a highly adhesive material (such as EPDM), the cushioning 99 sticks to the duct and comes off when the first duct and the second duct are attached to or detached from each other. This necessitates the use of cushioning made of a less adhesive material, resulting in the possibility that the connector portion would not have sufficient sealing properties However, with the foregoing duct connection configuration, since the inner surfaces of the ducts are not rubbed against the outer surface of the cushioning 99 when the ducts are attached to or detached from each other, it is possible to use cushioning made of a highly adhesive material (for example, EPDM), making it possible to improve the sealing properties of the connector portion.

The foregoing duct connection configuration (the connection configuration of the one duct 50A and the another duct 50B) is also applicable to the case where the one duct 50A is the relay duct 51 and the another duct 50B is the switching box 52. That is, as shown in FIG. 14, the foregoing duct connection configuration is also applicable to the connection configuration of the relay duct 51 and the switching box 52.

The foregoing duct connection configuration is also applicable to the case where the one duct 50A is the switching box 52 and the another duct 50B is the first duct 53. That is, as shown in FIG. 14, the foregoing duct connection configuration is also applicable to the connection configuration of the switching box 52 and the first duct 53.

The foregoing duct connection configuration is also applicable to the case where the one duct 50A is the switching box 52 and the another duct 50B is the second duct 54. That is, as shown in FIG. 14, the foregoing duct connection configuration is also applicable to the connection configuration of the switching box 52 and the second duct 54.

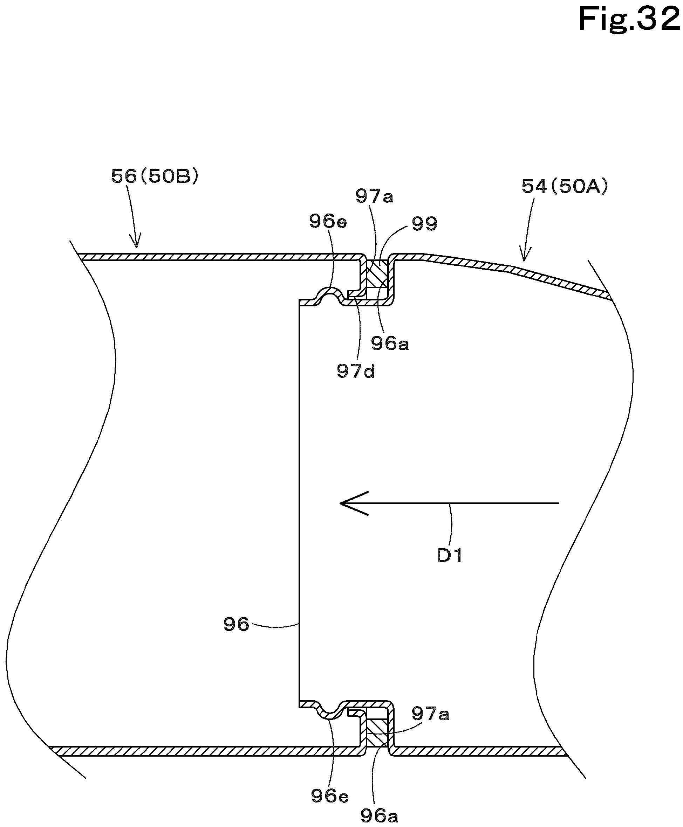

The foregoing duct connection configuration is also applicable to the case where the one duct 50A is the second duct 54 and the another duct 50B is the fourth duct 56. That is, as shown in FIG. 32, the foregoing duct connection configuration is also applicable to the connection configuration of the second duct 54 and the fourth duct 56.

A working machine 1 as has been described includes a machine body 2, a cabin 5 on the machine body, an operator's seat 6 provided inside the cabin 5, and an air conditioner body 29 to generate conditioned air to be supplied into the cabin 5, wherein the cabin 5 includes, at a back surface 5b thereof, an outside air inlet 34 to allow outside air to be introduced therethrough into the air conditioner body 29.

With the above configuration, the outside air inlet(s) 34 is/are provided at the back surface of the cabin 5 where a large space is available compared to a side surface of the cabin 5. Thus, it is possible to increase the size of filter(s) to remove foreign matter from air taken in through the outside air inlets 34. With this, it is possible to place a filter (first filter 71) with high performance (for example, Category2 of EN standards, MARV-16 of OSHA standards, or the like). It is also possible to place a different filter (such as the second filter 72 or the net body 86) in addition to the first filter 71. Furthermore, since it is possible to increase the size of the filter(s), it is possible to increase the amount of air to pass through the filter(s).

The air conditioner body 29 is located rearward of the operator's seat 6.

With the above configuration, it is possible to reduce the length of the duct(s) (duct structure 50) to guide outside air taken in through the outside air inlets 34 to the air conditioner body 29. With this, it is possible to reduce the distance over which outside air introduced through the outside air inlets 34 is supplied to the air conditioner body 29. Thus, it is possible to reduce the installation space for the duct(s) to guide outside air introduced through the outside air inlets 34 to the air conditioner body 29 within the cabin 5. Since it is possible to reduce the length of the ducts, it is possible to reliably take in outside air through the outside air inlets 34.

The back surface 5b of the cabin 5 has attached thereto a rear cover 77 projecting rearward from the back surface 5b. The outside air inlet 34 is provided in the rear cover 77.

With the above configuration, the rear cover 77 makes it possible to keep a large space available for the air conditioner body 29 and/or the like behind the operator's seat 6. Thus, it is possible to keep a large space available for the air conditioner body 29 and/or the like behind the operator's seat 6 without increasing the size of the cabin 5.

The rear cover 77 includes a lid 81 closeable and openable, and the outside air inlet 34 is provided in the lid 81.

With the above configuration, by opening the lid 81, it is possible to easily perform maintenance such as changing filters through which outside air introduced through the outside air inlets 34 passes.

The working machine 1 further includes a first filter 71 to remove foreign matter contained in outside air introduced through the outside air inlet 34, and an outside air duct 66 to guide outside air that has passed through the first filter 71 toward the air conditioner body 29. The first filter 71 is attached to the outside air duct 66.

With this configuration, when the outside air taken in through the outside air inlets 34 passes through the outside air duct 66 and is guided to the air conditioner body 29, it is possible to reliably remove foreign matter included in the outside air via the first filter 71.

The working machine 1 further includes a second filter 72 coarser than the first filter 71 and provided between the outside air inlet 34 and the first filter 71, and a frame 73 to fix the second filter 72 and the first filter 71 to the outside air duct 66.

With this configuration, outside air taken in through the outside air inlets 34 can be passed through the second filter 72 and then supplied to the first filter 71, making the first filter 71 less likely to be clogged and making it possible to increase the lifetime of the first filter 71. Furthermore, since the first filter 71 and the second filter 72 are unfastened by detaching the frame 73, it is possible to easily perform work to replace the first filter 71 and the second filter 72.

The working machine 1 further includes an insect catching net provided between the outside air inlet 34 and the second filter 72.

With this configuration, it is possible to catch insects etc., that entered through the outside air inlets 34 using the net 86. Thus, it is possible to eliminate or reduce the likelihood that the second filter 72 will be clogged with insects etc. that entered through the outside air inlets 34, and it is possible to increase the lifetime of the second filter 72.

The lid 81 has, attached to a front portion thereof, a case 85 to house a net 86 such that the net 86 is removable.

With this configuration, it is possible to easily attach the net 86, and it is also possible to remove the net 86 from the case 85 and to remove the caught insects etc. With this, it is possible to prevent or reduce clogging of the net 86.

The case 85 includes a front panel 85a provided forward of the net 86 such that the front panel 85a faces the outside air inlet 34. The front panel 85a includes an opening 85c to allow passage of outside air taken in through the outside air inlet 34. The opening 85c is located higher than the outside air inlet 34.

With this configuration, when the working machine 1 is cleaned using water, it is possible to eliminate or reduce the likelihood that the washing water that entered through the outside air inlets 34 will go into the openings 85c.

The case 85 includes a projecting portion 85g projecting from the front panel 85a toward the outside air inlet 34 and configured to abut a front surface of the net 86. The extent to which the projecting portion 85g projects increases in a top-to-bottom direction.

With this configuration, when the case 85 is attached to the front portion of the lid 81, the projecting portion(s) 85g press the net 86 against the lid 81. With this, it is possible to place the net 86 such that the net 86 abuts or is present near the outside air inlets 34. Furthermore, since the extent to which the projecting portion(s) 85g project(s) increases in the top-to-bottom direction, it is possible to reliably cause at least the bottom portion of the projecting portion 85g to abut the net 86. Furthermore, since the extent to which the projecting portion(s) 85g project(s) is small at the upper portion, it is possible to easily perform work to place the net 86 into the case 85 from above.

A working machine 1 includes a machine body 2, a cabin 5 on the machine body 2, an operator's seat 6 provided inside the cabin 5, an air conditioner body 29 to generate conditioned air to be supplied into the cabin 5, and a duct structure 50 to guide conditioned air supplied from the air conditioner body 29, wherein the air conditioner body 29 is operable to mix cool air and warm air to generate conditioned air for cooling or heating, the duct structure 50 includes a first duct 53 to allow conditioned air for cooling to flow therethrough, a second duct 54 to allow conditioned air for heating to flow therethrough, a switching box 52 connected to the first duct 53 and the second duct 54 and including a switch portion 52d to switch between a first state in which conditioned air supplied from the air conditioner body 29 is allowed to flow through the first duct 53, and a second state in which conditioned air supplied from the air conditioner body 29 is allowed to flow through the second duct 54, and a relay duct 51 to connect the air conditioner body 29 and the switching box 52 to guide conditioned air generated by the air conditioner body 29 to the switching box 52.

With this configuration, even if the conditioned air generated by the air conditioner body 29 is ejected such that cool air and warm air are not thoroughly mixed, it is possible to guide the conditioned air into the switching box 52 after thoroughly mixing the cool air and warm air in the relay duct 51. Thus, it is possible to switch the state of the switching box 52 under the condition in which cool air and warm air are thoroughly mixed. With this, it is possible to guide the conditioned air for cooling or heating at a suitable temperature, in which cool air and warm air are thoroughly mixed, from the switching box 52 into the first duct 53 or the second duct 54.

The air conditioner body 29 is located rearward of the operator's seat 6. The duct structure 50 extends from a position rearward of the operator's seat 6, via a space at one side of the operator's seat 6, to a position forward of the operator's seat 6.

With this configuration, since the air conditioner body 29 is located rearward of the operator's seat 6, the distance from the air conditioner body 29 to the switching box 52 is long. Thus, it is possible to thoroughly mix cool air and warm air in the relay duct 51 and then guide the air into the switching box 52. Furthermore, compared to when the air conditioner body 29 and the duct structure 50 are provided below the operator's seat 6, it is possible to increase a space in the vicinity of the feet of the operator seated on the operator's seat 6.

The working machine 1 further includes a manipulator (right manipulator 21) provided at one side of the operator's seat 6. The first duct 53 extends between the manipulator (right manipulator 21) and an inner wall surface 5a of the cabin 5 that faces the manipulator (right manipulator 21).

With this configuration, it is possible to place the first duct 53 such that the first duct 53 extends in the front-rear direction through a space at one side of the operator seated on the operator's seat 6. Thus, it is possible to eject conditioned air for cooling through the first duct 53 in the vicinity of the operator seated on the operator's seat 6 (for example, in the vicinity of the face of the operator).

The first duct 53 includes a first air outlet 53d. The first air outlet 53d includes a front air outlet 53d1 which includes an opening located at the one side of the operator's seat 6 and higher than the manipulator (right manipulator 21).

With this configuration, it is possible to eject conditioned air for cooling through the front air outlet 53d1 at a position in the vicinity of the face of the operator seated on the operator's seat 6. Thus, it is possible to give a strong cool feeling to the operator. Furthermore, the following is also achieved. Since the first air outlet 53d of known techniques is provided in the vicinity of the display 33 located forward of the operator's seat 6, it is difficult to increase the size of the display 33. In this regard, since the first air outlet 53d is located at a distance from the display 33, it is possible to increase the size of the display 33.

The first air outlet 53d includes a rear air outlet 53d2 which includes an opening located rearward of the operator's seat 6.

With this configuration, it is possible to eject conditioned air for cooling through the rear air outlet 53d2 at a position in the vicinity of the back of the head of the operator seated on the operator's seat 6. Thus, it is possible to give a strong cool feeling to the operator.

The switching box 52 is provided at the one side of the operator's seat 6.

With this configuration, it is possible to eject, at a position in the vicinity of the operator's seat 6, conditioned air at a suitable temperature from the switching box 52 in which cool air and warm air are thoroughly mixed. Furthermore, in the case where the air conditioner body 29 is located rearward the operator's seat 6, it is possible to increase the distance from the air conditioner body 29 to the switching box 52. Thus, it is possible to thoroughly mix cool air and warm air in the relay duct 51 and then guide the air to the switching box 52.

The duct structure 50 extends through a space below the manipulator (right manipulator 21) in a front-rear direction.

With this configuration, it is possible to allow the duct structure 50 to extend in the front-rear direction such that the duct structure 50 does not obstruct the operator seated on the operator's seat 6.

The first duct 53 includes a flat portion (third portion 53c) which is shorter in a machine body width direction than in a front-rear direction. The flat portion is provided between the manipulator (right manipulator 21) and the inner wall surface 5a of the cabin 5.

With this configuration, it is possible to place the flat portion (third portion 53c) of the first duct 53 in the vicinity of the operator seated on the operator's seat 6. Thus, it is possible to eject conditioned air for cooling (cool conditioned air) at a position in the vicinity of the face of the operator seated on the operator's seat 6. Furthermore, since cool conditioned air is ejected at a position in the vicinity of the face of the operator, it is possible to increase the speed of the flow of the cool conditioned air hitting the face or an area around the face of the operator.

The flat portion (third portion 53c) includes a front air outlet 53d1 at a front portion thereof, and includes a rear air outlet 53d2 at a rear portion thereof.

With this configuration, it is possible to eject conditioned air for cooling through the front air outlet 53d1 at a position in the vicinity of the face of the operator seated on the operator's seat 6, and it is possible to eject conditioned air for cooling through the rear air outlet 53d2 at a position in the vicinity of the back of the head of the operator.

The first duct 53 includes a main portion (first portion 53a) to connect the switching box 52 and a third duct 55 provided forward of the first duct 53, and the flat portion (third portion 53c) extending upward from the main portion along the inner wall surface 5a of the cabin 5. The flat portion is shorter than the main portion in the machine body width direction.

With this configuration, it is possible to guide conditioned air from the switching box 52 to the third duct 55 and also possible to guide conditioned air upward along the inner wall surface 5a of the cabin 5 using a single duct (first duct 53).

The relay duct 51 includes a passage enlarged portion 51f in which a cross-sectional area of a passage thereof increases in a direction from the air conditioner body 29 toward the switching box 52.

With this configuration, since the speed of the flow of air flowing through the relay duct 51 decreases in the direction from the air conditioner body 29 toward the switching box 52, it is possible to reliably mix cool air and warm air within the relay duct 51.

A working machine 1 includes a machine body 2, a cabin 5 on the machine body 2, an air conditioner body 29 to generate conditioned air to be supplied into the cabin 5, and a duct structure 50 to guide conditioned air supplied from the air conditioner body 29, wherein the duct structure 50 includes one duct 50A and another duct 50B connected together, the one duct 50A includes a first connector portion 96 to be inserted into and connected to the another duct 50B, the another duct 50B includes a second connector portion 97 to receive and to be connected to the one duct 50A, the first connector portion 96 includes a first end surface 96a perpendicular to a direction in which the first connector portion 96 is inserted, the second connector portion 97 includes a second end surface 97a to face the first end surface 96a, and cushioning 99 is interposed between the first end surface 96a and the second end surface 97a.

With this configuration, since the cushioning 99 is interposed between the first end surface 96a perpendicular to the insertion direction and the second end surface 97a facing the first end surface 96a, the cushioning 99 is not rubbed against the ducts when the one duct 50A and the another duct 50B are attached to or detached from each other. Thus, it is possible to eliminate or reduce the likelihood that the cushioning 99 will come off when the one duct 50A and the another duct 50B are attached to or detached from each other.

The first end surface 96a is an annular surface extending inward from an outer peripheral surface of the one duct 50A. The second end surface 97a is an annular surface extending inward from an outer peripheral surface of the another duct 50B. The cushioning 99 is an annular component to abut the first end surface 96a and the second end surface 97a.

With this configuration, the cushioning 99 is interposed between the first end surface 96a and the second end surface 97a along the entire perimeter of the connector portions of the one duct 50A and the another duct 50B, and therefore good sealing properties are achieved at the connector portions.

The second connector portion 97 includes a folded portion 97d folded from a radially innermost portion 97c of the second end surface 97a in a direction away from the first end surface 96a.

With this configuration, since the second connector portion 97 of the another duct 50B includes the folded portion 97d, in the case where the another duct 50B is produced by blow molding, it is possible to produce the inner peripheral surface of the second connector portion 97 (inner surface 97e of the folded portion 97d) with high dimensional accuracy. Thus, it is possible to produce another duct 50B including a second connector portion 97 with high dimensional accuracy at low cost. Furthermore, the adhesion of the connector portions of the one duct 50A and the another duct 50B improves.

The first connector portion 96 includes a tubular portion 96c extending from a radially innermost portion 96b of the first end surface 96a toward the another duct 50B. The tubular portion 96c is provided, on an outer surface thereof, with a projection 96e to engage with the folded portion 97d.

With this configuration, since the folded portion 97d is engaged with the projection(s) 96e, the another duct 50B is less likely to fall off from the one duct 50A.

The folded portion 97d is configured to abut the outer surface of the tubular portion 96c when the one duct 50A and the another duct 50B are connected to each other.

With this configuration, when the one duct 50A and the another duct 50B are connected together, the another duct 50B is even less likely to fall off from the one duct 50A.

The cushioning 99 is configured to abut the first end surface 96a, the second end surface 97a, and an outer surface of the tubular portion 96c when the one duct 50A and the another duct 50B are connected to each other.

With this configuration, when the one duct 50A and the another duct 50B are connected together, it is possible to improve the sealing properties at the connector portions of the one duct 50A and of the another duct 50B to improve.

The cushioning 99 is bonded to the first end surface 96a or the second end surface 97a.

With this configuration, it is possible to more reliably eliminate or reduce the likelihood that the cushioning 99 will come off.

While embodiments of the present invention have been described above, it is to be understood that the embodiments disclosed herein are considered as examples in all aspects and are not considered as limitations. The scope of the present invention is to be determined not by the foregoing description but by the claims, and is intended to include all variations and modifications within the scope of the claims and their equivalents.

### Reference Signs List

1 Working machine
2 Machine body
5 Cabin
5a Inner wall surface of cabin
5b Back surface of cabin
6 Operator's seat
21 Manipulator (right manipulator)
29 Air conditioner body
34 Outside air inlet
50 Duct structure
50A One duct
50B Another duct
52d Switch portion
52 Switching box
51 Relay duct
51f Passage enlarged portion
53 First duct
53a Main portion
53c Flat portion
53d First air outlet
53d1 Front air outlet
53d2 Rear air outlet
54 Second duct
66 Outside air duct
77 Rear cover
71 First filter
72 Second filter
73 Frame
81 Lid
85 Case
85a Front panel
85c Opening
85g Projecting portion
86 Net
96 First connector portion
96a First end surface
96b Radially innermost portion
96c Tubular portion
96e Projection
97 Second connector portion
97a Second end surface
97d Folded portion
99 Cushioning

## Claims

1. A working machine comprising:
a machine body;
a cabin on the machine body;
an operator's seat provided inside the cabin;
an air conditioner body to generate conditioned air to be supplied into the cabin; and
a duct structure to guide conditioned air supplied from the air conditioner body;
wherein
the air conditioner body is operable to mix cool air and warm air to generate conditioned air for cooling or heating;
the duct structure includes:
a first duct to allow conditioned air for cooling to flow therethrough;
a second duct to allow conditioned air for heating to flow therethrough;
a switching box connected to the first duct and the second duct and including a switch portion to switch between a first state in which conditioned air supplied from the air conditioner body is allowed to flow through the first duct, and a second state in which conditioned air supplied from the air conditioner body is allowed to flow through the second duct; and
a relay duct to connect the air conditioner body and the switching box to guide conditioned air generated by the air conditioner body to the switching box.

2. The working machine according to claim 1, wherein
the air conditioner body is located rearward of the operator's seat; and
the duct structure extends from a position rearward of the operator's seat, via a space at one side of the operator's seat, to a position forward of the operator's seat.

3. The working machine according to claim 1, further comprising
a manipulator provided at one side of the operator's seat; wherein
the first duct extends between the manipulator and an inner wall surface of the cabin that faces the manipulator.

4. The working machine according to claim 3, wherein
the first duct includes a first air outlet; and
the first air outlet includes a front air outlet which includes an opening located at the one side of the operator's seat and higher than the manipulator.

5. The working machine according to claim 4, wherein
the first air outlet includes a rear air outlet which includes an opening located rearward of the operator's seat.

6. The working machine according to claim 4, wherein
the switching box is provided at the one side of the operator's seat.

7. The working machine according to claim 3, wherein
the duct structure extends through a space below the manipulator in a front-rear direction.

8. The working machine according to claim 3, wherein
the first duct includes a flat portion which is shorter in a machine body width direction than in a front-rear direction; and
the flat portion is provided between the manipulator and the inner wall surface of the cabin.

9. The working machine according to claim 8, wherein
the flat portion includes a front air outlet at a front portion thereof, and includes a rear air outlet at a rear portion thereof.

10. The working machine according to claim 8, wherein
the first duct includes a main portion to connect the switching box and a third duct provided forward of the first duct, and the flat portion extending upward from the main portion along the inner wall surface of the cabin; and
the flat portion is shorter than the main portion in the machine body width direction.

11. The working machine according to claim 1, wherein
the relay duct includes a passage enlarged portion in which a cross-sectional area of a passage thereof increases in a direction from the air conditioner body toward the switching box.

12. The working machine according to any one of claims 1 to 11, wherein
the duct structure includes one duct and another duct connected together;
the one duct includes a first connector portion to be inserted into and connected to the another duct;
the another duct includes a second connector portion to receive and to be connected to the one duct;
the first connector portion includes a first end surface perpendicular to a direction in which the first connector portion is inserted;
the second connector portion includes a second end surface to face the first end surface; and
cushioning is interposed between the first end surface and the second end surface.

13. The working machine according to claim 12, wherein
the first end surface is an annular surface extending inward from an outer peripheral surface of the one duct;
the second end surface is an annular surface extending inward from an outer peripheral surface of the another duct;
the cushioning is an annular component to abut the first end surface and the second end surface;
the second connector portion includes a folded portion folded from a radially innermost portion of the second end surface in a direction away from the first end surface;
the first connector portion includes a tubular portion extending from a radially innermost portion of the first end surface toward the another duct;
the tubular portion is provided, on an outer surface thereof, with a projection to engage with the folded portion; and
the folded portion is configured to abut the outer surface of the tubular portion when the one duct and the another duct are connected to each other.

14. The working machine according to any one of claims 1 to 13, wherein
the cabin includes, at a back surface thereof, an outside air inlet to allow outside air to be introduced therethrough into the air conditioner body;
the back surface of the cabin has attached thereto a rear cover projecting rearward from the back surface;
the outside air inlet is provided in the rear cover;
the rear cover includes a lid closeable and openable; and
the outside air inlet is provided in the lid.

15. The working machine according to claim 14, further comprising:
a first filter to remove foreign matter contained in outside air introduced through the outside air inlet;
an outside air duct to guide outside air that has passed through the first filter toward the air conditioner body;
a second filter coarser than the first filter and provided between the outside air inlet and the first filter;
a frame to fix the second filter and the first filter to the outside air duct; and
an insect catching net provided between the outside air inlet and the second filter.
